(19)

Europäisches Patentamt
European Patent Office
Office européen des brevets

(11) **EP 2 812 760 B1**

(12) **EUROPEAN PATENT SPECIFICATION**

(45) Date of publication and mention of the grant of the patent:
**14.12.2016 Bulletin 2016/50**

(21) Application number: **13705883.0**

(22) Date of filing: **07.02.2013**

(51) Int Cl.:
**G05B 11/32** *(2006.01)*  **G05B 13/04** *(2006.01)*

(86) International application number:
**PCT/US2013/025127**

(87) International publication number:
**WO 2013/119797 (15.08.2013 Gazette 2013/33)**

(54) **METHODS AND APPARATUSES FOR ADVANCED MULTIPLE VARIABLE CONTROL WITH HIGH DIMENSION MULTIPLE CONSTRAINTS**

VERFAHREN UND VORRICHTUNGEN FÜR EINE ERWEITERTE, MEHRFACH VARIABLE STEUERUNG MIT MEHREREN EINSCHRÄNKUNGEN IN HOHER DIMENSION

PROCÉDÉS ET APPAREILS POUR CONTRÔLE DE VARIABLES MULTIPLES AVANCÉ AVEC DES CONTRAINTES MULTIPLES À HAUTE DIMENSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2012 US 201261597316 P**
**25.10.2012 US 201213660005**

(43) Date of publication of application:
**17.12.2014 Bulletin 2014/51**

(73) Proprietor: **General Electric Company**
**Schenectady, NY 12345 (US)**

(72) Inventors:
• **CARPENTER, Sheldon**
  **Cincinnati, OH 45215-1988 (US)**
• **LU, Manxue**
  **Lynn, MA 01910-0002 (US)**

(74) Representative: **Williams, Andrew Richard**
**GE International Inc.**
**GPO-Europe**
**The Ark**
**201 Talgarth Road**
**Hammersmith**
**London W6 8BJ (GB)**

(56) References cited:
**EP-A1- 1 426 840**    **US-A1- 2004 107 013**
**US-A1- 2007 162 161**

• **MENG C WU ET AL: "Weighted switching lifted digital redesign with state saturation for cascaded analogue systems", I M A JOURNAL OF MATHEMATICAL CONTROL & INFORMATION, OXFORD UNIVERSITY PRESS, OXFORD, GB, vol. 20, no. 1, 1 January 2003 (2003-01-01), pages 65-87, XP002442982, ISSN: 0265-0754, DOI: 10.1093/IMAMCI/20.1.65**
• **ABOU-JEYAB ET AL: "Constrained Multivariable Control of Fluidized Catalytic Cracking Process Using Linear Programming", CHEMICAL ENGINEERING RESEARCH AND DESIGN, PART A, INSTITUTION OF CHEMICAL ENGINEERS, XX, vol. 79, no. 3, 1 April 2001 (2001-04-01), pages 274-282, XP022536037, ISSN: 0263-8762, DOI: 10.1205/026387601750281806**

EP 2 812 760 B1

**Description**

BACKGROUND OF THE INVENTION

The present disclosure pertains to control system design and operation when the controlled system includes multiple control targets with multiple constraints.

In a control system having more than one primary target to be controlled for multiple primary control objectives, such as thrust, fan operability, core operability, etc. (for a jet engine, for example), the control system will have multiple inputs and multiple outputs to control. Such a control system should address the challenge of multi-variable control with multiple constraints, particularly when the primary control objectives have high transient and dynamic requirements. The challenge fundamentally is a coordinated control to maintain primary control objectives as much as possible while enforcing a selected set of active constraints that can satisfy all potentially active constraints.

Traditionally, single-input-single-output (SISO) control is used for one primary control objective - for example in a gas turbine engine, fan speed only. The concerned constraints are converted to the control actuator rate - fuel rate, respectively, the constraint demanding most fuel rate is selected as most limiting constraint and enforced. Here, there is an assumption that fuel rate is always proportional to fan speed change, and fan speed changes always align up and dominate the thrust response and operability. This may be true in many operating conditions, but it is not true for certain operating conditions, such as supersonic operating area for conventional engine applications, not to mention nonconventional engine applications, such as powered lift operation.

Multiple constraints may be in one subset only, that is, at same time, only one primary controlled output needs to be traded off. There are cases, however, in which multiple constraints are in two or more subsets that require two or more primary controlled outputs to be traded off. Certainly, at most, the number of the subsets should be equal to the number of the primary control handles. For example, in the gas turbine engine example, if both "maximum core speed" and "maximum exhaust temperature" constraints are active, it may be necessary to trade off both primary controlled outputs, "fan speed" and "pressure ratio," for better thrust and operability performance, while enforcing both the "maximum core speed" and "maximum exhaust temperature" constraints. It is a challenge to control multiple variables with higher dimension multiple constraints.

Previous approaches to solve this problem have either greatly oversimplified the problem or added substantial complexity. The oversimplified approach ignored fundamental confounding in the relationships between the controlled plant inputs and the performance trade-off and control mode selection decisions that must be made. This limited its applicability to certain 2x2 multi-input-multi-output (MIMO) systems, and does not represent a robust solution for higher dimension MIMO systems. The overly complicated approaches coupled the constraint control with the primary control, usually lost expected control objectives priority, and sacrificed the physical meaning, robustness, deterministicness, and maintainability of the control solution.

US 2007/0189462 A1 relates to an X-ray system and control thereof.

BRIEF DESCRIPTION OF THE INVENTION

There is provided a multivariable control system (and related method) of a physical plant with high dimensions multiple constraints problems where trade-off primary control outputs are predetermined based on plant physics and performance requirements, as defined in the appended claims.

The present disclosure provides a control system design methodology that incorporates a simple, deterministic, robust and systematic solution with explicit physical meaning for the advanced multi-variable control, with high dimension multiple constraint problems where the trade-off primary control outputs are pre-determined based on plant physics (for example, engine, or other plant characteristics depending upon the application). The disclosed methodology provides a fundamental solution for the problem of MIMO control with multiple constraints and/or multiple high dimension constraints, it follows that the resulted solution well coordinates the multi-variable control with the selected multiple active constraints enforcement such that, when not constrained, the primary multi-variable control has its optimized performance as designed; when constrained, the proper most limiting active constraints are correctly selected and naturally enforced by replacing the pre-determined trade-off primary control outputs, respectively. If the most limiting constraints are enforced, then the rest of the constraints can be automatically satisfied. Together they make the overall system still have desired primary control performance while running under the enforced constraints, and the traded-off primary control outputs have natural fall-out.

Consider the Multiple Variable Control with Multiple Constraints as a whole space. One subspace is a class with only one subset of constraints to be active and only one primary control output to be traded off -- this is single-dimension multiple constraints case. The rest of the space is with two or more subsets of constraints to be active and two or more primary controls to be traded off -- this is high dimension multiple constraints case. The control system design methodology provided by this disclosure is not only for single dimension multiple constraints case but also for high dimension multiple constraints case.

The control system design methodology provided by this disclosure results in a simple physics based selection logic, and a mathematically decoupled primary control with decoupled constraint control. That is, the primary controlled outputs are mathematically decoupled from one another, the selected constraints in control are mathematically decoupled from one another, and the selected constraints are mathematically decoupled from primary controlled outputs. It follows that each decoupled control target can be designed via single-input-single-output (SISO) control approaches for its specific performance requirements.

According to the current disclosure, an embodiment of a control system for a physical plant (such as, for example and without limitation, a gas turbine engine control, flight control, satellite control, rocket control, automotive control, industrial process control) may include: a set of control reference signals; a set of controlled output feedback signals from the physical plant; a multiple input multiple output (MIMO) primary decoupling controller providing control command derivatives to the integral action (and enabling the shaping of desired robust control of the primary control outputs); a set of SISO lead/lag controllers that can extend the bandwidths of decoupled primary SISO loops, respectively; a set of decoupled SISO controllers for controlled outputs tracking that receive primary controlled output tracking errors and provide desired pseudo inputs, respectively; a multiple input multiple output (MIMO) constraint decoupling controller decoupling the constraints from one another, decoupling the constraints from the non-traded off primary controlled outputs, and providing pseudo inputs based on the desired constraint responses for the Selection Logic (introduced below); a set of decoupled SISO controllers for constraint outputs tracking that receive constraint output tracking errors and shape desired constraint responses, respectively; a Selection Logic which compares the pseudo inputs generated by each subset of constraints and the pseudo input generated by the primary controlled output associated with that subset, selects the most limiting constraint for that subset, and determines the final pseudo inputs to go into the SISO Lead/Lag and MIMO Primary Decoupling Controller. With such an architecture, the integral action becomes a set of common SISO integrators shared by primary control and constraint control.

According to the current disclosure, a control system for a physical plant, includes: an integral action control unit providing control signals for a physical plant; a multiple-input-multiple-output (MIMO) primary decoupling controller providing control command derivatives to the integral action control unit and thereby forming at least a decoupled controlled plant; and a multiple-input-multiple-output (MIMO) constraint decoupling controller decoupling constraint outputs from the physical plant and providing pseudo inputs to the above decoupled controlled plant. In a more detailed embodiment, a selection logic section for selecting pseudo inputs for the primary decoupling controller from those pseudo inputs calculated by: 1) the MIMO constraint decoupling controller and the constraint tracking controller; 2) the primary MIMO decoupling controller and the output tracking controller. In a further detailed embodiment, the control system further includes a set of decoupled single-input-single-output (SISO) controlled output tracking controllers receiving controlled output tracking error signals and providing pseudo input signals to the decoupled controlled plant. In a further detailed embodiment, the selection logic compares the pseudo inputs from the MIMO constraint decoupling controller and the pseudo input signals from the SISO controlled output tracking controllers and selects at least one most limiting constraint to determine pseudo inputs to the (SISO) lead/lag controllers. Alternatively, or in addition, the selection logic compares the pseudo inputs from the MIMO constraint decoupling controller and the pseudo input signals from the SISO controlled output tracking controllers and selects at least one most limiting constraint to determine pseudo inputs to (MIMO) primary decoupling controller.

In an embodiment, the control system further includes a set of single-input-single-output (SISO) lead/lag controllers to extend the bandwidths of decoupled primary SISO control loops, providing v-dot-star to the primary decoupling controller. Alternatively, or in addition, the MIMO constraint decoupling controller decouples the constraints from the non-traded off primary controlled outputs by rejecting non-traded off primary controlled outputs as known disturbance inputs. Alternatively, or in addition, the MIMO constraint decoupling controller decouples constraint outputs from one another, and decouples the constraints from the non-traded off primary controlled outputs. Alternatively, or in addition, the control system further includes a set of single-input-single-output (SISO) constraint output tracking controllers that receive constraint output tracking errors from the physical plant and shape desired constraint responses based on the MIMO constraint decoupling controller. Such constraint output tracking errors may be determined, at least in part, based upon the differences between predetermined constraint limits and constraint outputs.

According to the current disclosure a method for multiple variable control of a physical plant with not only multiple inputs and multiple outputs but also high dimension multiple constraints, includes the steps of: decoupling the multiple primary controlled outputs from one another, the step of decoupling the multiple primary controlled outputs uses a multi-input-multi-output (MIMO) primary decoupling controller; decoupling the multiple constraints from one another and decoupling the multiple constraints from non-traded off primary controlled outputs, the step of decoupling the multiple constraints involves a multi-input-multi-output (MIMO) constraint decoupling controller; and providing pseudo inputs, where the pseudo outputs generated by constraints are comparable to the pseudo outputs generated by the primary controlled outputs, to the MIMO primary decoupling controller. The method further includes a step of selecting the most limiting constraint(s) for the MIMO primary decoupling controller; where the step of selecting the most limiting constraint includes the step of comparing the pseudo inputs generated by given subsets of constraints and the pseudo input generated by the primary controlled output associated with that subset, and selecting the most limiting constraint based, at least in part, on those comparisons. The MIMO primary decoupling controller may provide decoupled control using dynamics inversion. The method may further include a step of extending the bandwidths of decoupled primary control loops using a set of single-input-single-output (SISO) lead/lag controllers upstream of the MIMO primary decoupling controller. And the step of decoupling the multiple constraints from non-traded off primary controlled outputs includes a step of rejecting the non-traded off primary controlled outputs as known disturbance inputs.

According to the current disclosure a method for multiple variable control of a physical plant with not only multiple inputs and multiple outputs but also high dimension multiple constraints, includes the steps of: mathematically decoupling primary controlled outputs of a controlled physical plant from one another; mathematically decoupling constraints from one another; mathematically decoupling selected constraints from non-traded off primary controlled outputs of the controlled physical plant; and controlling the physical plant using the decoupled primary controlled outputs and/or the decoupled selected constraints which are decoupled from the non-traded off primary controlled outputs. Such a method further includes a step of selecting one or more most limiting constraints.

Development of the advanced multiple variable control with high dimension multiple constraints will now be introduced and discussed.

BRIEF DESCRIPTION OF THE DRAWINGS

Fig. 1 is a block diagram representation of a control system architecture which can be multiple variable control with high dimension multiple constraints or single variable control with single dimension multiple constraints embodiment according to the current disclosure;

Fig. 2 is a block diagram representation of an exemplary implementation of the exemplary control system architecture according to the current disclosure;

Fig. 3 is a block diagram representation of an exemplary common single-input-single-output (SISO) integrator for use with the current embodiments;

Fig. 4 is a diagram representation of selection logic for a one dimension constraint set following a min/max selection principle;

Fig. 5 is a diagram representation of selection logic for a one dimension constraint set following a different min/max selection principle; and

Fig. 6 is a flow-chart representation of an exemplary selection logic process for high dimension constraint sets according to the current disclosure.

DETAILED DESCRIPTION

The present disclosure provides a control system design methodology that incorporates a simple, deterministic, robust and systematic solution with explicit physical meaning for the advanced multi-variable control, with high dimension multiple constraints problems where the trade-off primary control outputs are pre-determined based on plant physics and performance requirements (for example, engine, or other plant characteristics depending upon the application). The solution well coordinates the multi-variable control with the selected multiple active constraints enforcement such that, when not constrained, the primary multi-variable control has its optimized performance as designed; when constrained, the proper most limiting active constraints are correctly selected and naturally enforced by replacing the pre-determined trade-off primary control outputs, respectively. If the most limiting constraints are enforced, then the rest of the constraints can be automatically satisfied. Together they make the overall system still have desired primary control performance while running under the enforced constraints, and the traded-off primary control outputs have natural fall-out.

When the primary multiple variable control is not constrained, it should run to its desired performance. When the primary control is constrained, the constraint control should keep the most limiting constraints staying within their limits; and at the same time, since constraint control uses some or all primary control handles, the primary control should be traded off in an acceptable way while the intended non-traded-off part of primary control should be not impacted by enforcing the most limiting constraints.

Based on the above control design goals, first, the primary multiple variable is designed to have decoupled input/output mapping. Then multiple constraint control is designed based on the new controlled plant resulted from the primary control design such that the constraint control not only decouples constraints from one another, decouples constraints from the non-traded off primary controlled output(s), also provides the pseudo inputs that are comparable to the pseudo inputs generated by the primary controlled outputs. With such an architecture and pseudo inputs as key link, both MIMO primary control and MIMO constraint control lead to simple deterministic SISO loop design.

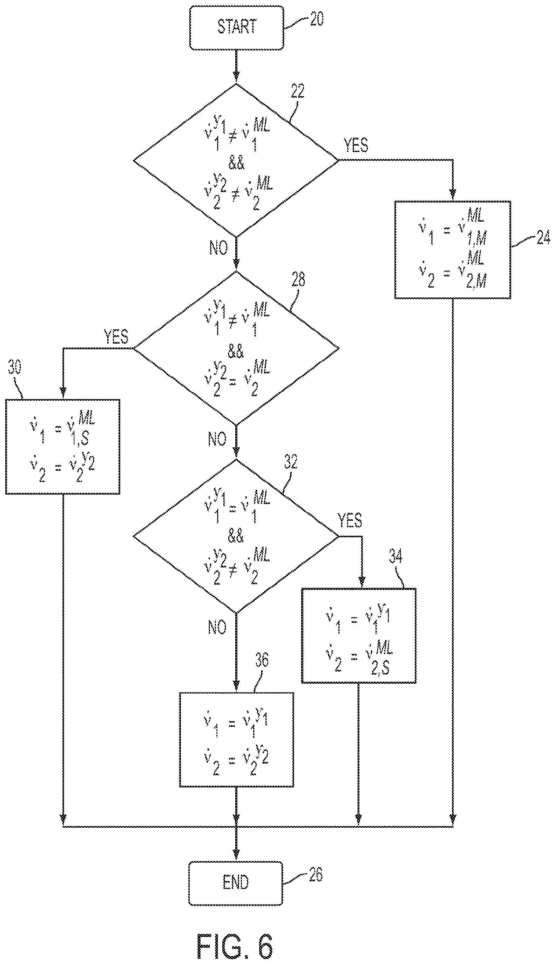

Mechanisms for obtaining a simple, deterministic, robust and systematic solution with explicit physical meaning for the advanced multi-variable control with multiple constraint problems include: (1) To classify constraint candidates into specific subsets, and each constraint subset is corresponding to one trade-off target of primary control outputs; (2) The number of constraint subsets should be equal to or less than the primary control handles; (3) For high dimension multiple constraints, i.e., constraints from different subsets to be active at same time, they should be decoupled before constructing the SISO constraint controllers in each subset; (4) Each constraint subset is calculating its trade-off target - the specific pseudo input based on each of the constraint regulators in this constraint subset; (5) MIMO primary control should decouple the primary controlled outputs; (6) Therefore, multi-dimension constraints should be decoupled one dimension from another dimension and decoupled from the non-traded off primary controlled outputs -- it follows that the above constraint controller is a decoupled SISO regulator with desired dynamics based on constraint MIMO dynamics inversion with respect to its relative degree; (7) The most limiting constraint should be resulted from comparing the pseudo inputs generated by the constraints in each subset and the associated primary controlled output based on pre-determined selection logic; (8) The pseudo input generated by the most limiting constraint controller is applied to replace the primary control that is pre-determined to trade off; (9) The most limiting constraint(s) active/inactive transition is managed by the selection logic smoothly (Example is as shown in Fig.6).

The design procedure and approaches of the Advanced Multiple Variable Control with High Dimension Multiple Constraints is described below.

**The Original Controlled Plant**

Without loss of generality, assume the original controlled plant is:

$$x_{k+1} = f(x_k, \dot{u}_k, d_k)$$

$$y_k = h(x_k, \dot{u}_k, d_k)$$

At sample $k$, the system states $x_k$, the inputs $\dot{u}_{k-1}$, and the disturbances $d_k$ are known. Thus, the deviation variables are expressed about this current operating condition, i.e. $x_k$, $\dot{u}_{k-1}$, $d_k$, $y_k^- = h(x_k, \dot{u}_{k-1}, d_k)$

Define the deviation variables from these conditions,

$$\tilde{x}_j = x_j - x_k$$

$$\tilde{u}_j = \dot{u}_j - \dot{u}_{k-1}$$

$$\tilde{d}_j = d_j - d_k$$

$$\tilde{y}_j = y_j - y_k^-$$

The local linearized model of the system in terms of deviation variables may be derived

$$x_{k+1} - x_k = \tilde{x}_{k+1}$$

$$= f(x_k, u_{k-1}, d_k) - x_k + \left.\frac{\partial f}{\partial x}\right|_{k,k-1}(x_k - x_k) + \left.\frac{\partial f}{\partial \dot{u}}\right|_{k,k-1}(\dot{u}_k - \dot{u}_{k-1}) + \left.\frac{\partial f}{\partial d}\right|_{k,k-1}(d_k - d_k)$$

$$= F_k + A\tilde{x}_k + B\dot{u}_k + B_d\tilde{d}_k$$

Approximate $F_k \approx \hat{\tilde{x}}_k = x_k - x_{k-1}$, and it is treated as a known initial condition for $\tilde{x}_{k+1}$ at sample k, or, autonomous response of the system states over one control sample free from any control action update, i.e. $\tilde{\dot{u}}_k = 0$.

$$y_k - y_k^- = \tilde{y}_k$$

$$= h(x_k, u_{k-1}, d_k) - y_k^- + \left.\frac{\partial h}{\partial x}\right|_{k,k-1}(x_k - x_k) + \left.\frac{\partial h}{\partial \dot{u}}\right|_{k,k-1}(\dot{u}_k - \dot{u}_{k-1}) + \left.\frac{\partial h}{\partial d}\right|_{k,k-1}(d_k - d_k)$$

$$= C\tilde{x}_k + D_u\tilde{\dot{u}}_k + D_d\tilde{d}_k$$

The generic perturbation model based on plant dynamics partials is presented below (for example, it can be based on engine dynamics partials from cycle study):

$$\tilde{x}(k+1) = A\tilde{x}(k) + B\tilde{\dot{u}}(k) + B_d\tilde{d}(k) + F_k$$

$$\tilde{y}(k) = C\tilde{x}(k) + D_d\tilde{d}(k)$$

$$\tilde{y}_c(k) = C_c\tilde{x}(k) + D_{cd}\tilde{d}(k)$$

Where $\tilde{x} \in R^{n\times 1}$, $\tilde{\dot{u}} \in R^{m\times 1}$, $\tilde{y} \in R^{m\times 1}$, $\tilde{d} \in R^{q\times 1}$, $\in R^{p\times 1}$, $p>m$.

Approximations:

$$d(k) - d(k-1) = d(k+1) - d(k) \,,$$

$$\tilde{d}(k+1) = d(k+1) - d(k) \approx \hat{d}(k) \,,$$

Without loss of generality and for clear formulation of the design process, assume that the primary control has 3 control inputs and 3 outputs, i.e. **3 × 3** control,

$$\dot{u} = \begin{bmatrix} \dot{u}_1 \\ \dot{u}_2 \\ \dot{u}_3 \end{bmatrix}, \quad y = \begin{bmatrix} y_1 \\ y_2 \\ y_3 \end{bmatrix}, \quad y_c = \begin{bmatrix} y_{c1} \\ y_{c2} \\ y_{c3} \\ y_{c4} \end{bmatrix}$$

And assume that $y_1$ has relative degree 3, and $y_2$ and $y_3$ both have relative degree 2; and $y_{c1}$ has relative degree 3, and $y_{c2}$, $y_{c3}$ and $y_{c4}$ both have relative degree 2.

**The Primary Control based on Original Controlled Plant**

Use relative degree concept and dynamics inversion approach, the primary control output response is derived below.

Assume the relative degree of $\tilde{y}_i$ to $\tilde{u}$ is $Rd_i > 1$, then the primary controlled output response are:

$$\tilde{y}_i(k+1) = C_i A\tilde{x}(k) + C_i B\tilde{u}(k) + C_i B_d \tilde{d}(k) + C_i F_k + D_{di}\tilde{d}(k+1)$$

$$= C_i F_k + D_{di}\hat{d}(k) = K^1_{f,i} F_k + K^1_{d,i}\hat{d}(k),$$

$$\tilde{y}_i(k+2) = C_i A^2 \tilde{x}(k) + C_i AB\tilde{u}(k) + C_i AB_d \tilde{d}(k) + C_i B_d \tilde{d}(k+1) + C_i(A+I)F_k + D_{di}\tilde{d}(k+2)$$

$$= C_i(A+I)F_k + (C_i B_d + 2D_{di})\hat{d}(k) = K^2_{f,i} F_k + K^2_{d,i}\hat{d}(k),$$

...

$$\tilde{y}_i(k+Rd_i) = C_i A^{Rd_i}\tilde{x}(k) + C_i A^{Rd_i-1} B\tilde{u}(k) + (C_i A^{Rd_i-1} B_d \tilde{d}(k) + \cdots + C_i B_d \tilde{d}(k+Rd_i-1) + \cdots$$
$$+ D_{di}\tilde{d}(k+Rd_i)) + C_i(A^{Rd_i-1} + \cdots + A + I)F_k$$

$$= E_i \tilde{u}(k) + K_{f,i} F_k + K_{d,i}\hat{d}(k),$$

Where

$$E_i = C_i A^{Rd_i-1} B, \ K_{f,i} = C_i(A^{Rd_i-1} + \cdots + A + I),$$

$$K_{d,i} = C_i A^{Rd_i-2} B_d + \cdots + (Rd_i - 1)\cdot C_i B_d + Rd_i \cdot D_{di}$$

The current controlled output response in general is described below:

$$\tilde{y}(k+Rd) = E\tilde{u}(k) + K_f F_k + K_d\hat{d}(k)$$

Where

$$\tilde{y}(k+Rd) = \begin{bmatrix} \tilde{y}_1(k+3) \\ \tilde{y}_2(k+2) \\ \tilde{y}_3(k+2) \end{bmatrix},$$

$$E = \begin{bmatrix} E_1 \\ E_2 \\ E_3 \end{bmatrix} = \begin{bmatrix} C_1 A^2 B \\ C_2 AB \\ C_3 AB \end{bmatrix},$$

$$K_f = \begin{bmatrix} K_{f,1} \\ K_{f,2} \\ K_{f,3} \end{bmatrix} = \begin{bmatrix} C_1(A^2 + A + I) \\ C_2(A + I) \\ C_3(A + I) \end{bmatrix},$$

$$K_d = \begin{bmatrix} K_{d,1} \\ K_{d,2} \\ K_{d,3} \end{bmatrix} = \begin{bmatrix} C_1(A + 2I)B_d + 3D_{d1} \\ C_2 B_d + 2D_{d2} \\ C_3 B_d + 2D_{d2} \end{bmatrix}$$

Further, the dynamics of controlled output $y(k)$ is desired to track the reference $y_r(k)$, i.e., let

$$\hat{y}_i(k + j) = y_{ri}(k + j) - y_i(k), \quad i = 1,2,3; j = 0, \cdots, Rd_i,$$

the desired control tracking performance is shaped below:

$$(\hat{y}_1(k + 3) - \tilde{y}_1(k + 3)) + k_{1,2}(\hat{y}_1(k + 2) - \tilde{y}_1(k + 2)) + k_{1,1}(\hat{y}_1(k + 1) - \tilde{y}_1(k + 1)) + k_{1,0}(\hat{y}_1(k) - \tilde{y}_1(k)) = 0$$

$$(\hat{y}_2(k + 2) - \tilde{y}_2(k + 2)) + k_{2,1}(\hat{y}_2(k + 1) - \tilde{y}_2(k + 1)) + k_{2,0}(\hat{y}_2(k) - \tilde{y}_2(k)) = 0$$

$$(\hat{y}_3(k + 2) - \tilde{y}_3(k + 2)) + k_{3,1}(\hat{y}_3(k + 1) - \tilde{y}_3(k + 1)) + k_{3,0}(\hat{y}_3(k) - \tilde{y}_3(k)) = 0$$

Properly choose $k_{i,j}$, $i$=1,$\cdots$.3 ; $j$ = 0, $\cdots$ , $Rd_i$ -1 such that the following polynomial

$$\rho^{Rd_i} + \cdots + k_{i,j}\rho^j + \cdots + k_{i,1}\rho + k_{i,0} = 0 \qquad \text{(Eq. 130)}$$

has its eigenvalues all within the unit circle, then the primary control dynamics is asymptotically stable.

Usually $y_{ri}(k)$ is time-varying, the approximated $\tilde{y}_{ri}(k + j)$, $j$ = 1, $\cdots$,$Rd_i$ can be obtained by using extrapolation (such as linear format, exponential format, etc.). Let $\tilde{y}_{ri}(k)$-$y_{ri}(k)$-$y_{ri}(k-1)$. Approximate $\tilde{y}_{ri}(k+1) \approx \alpha_i \tilde{y}_{ri}(k)$, $\tilde{y}_r(k+2) \approx \alpha^2 y_r(k)$,...

The desired controlled output tracking response:

$$\tilde{y}_1(k + 3) = \hat{y}_1(k + 3) + k_{1,2}(\hat{y}_1(k + 2) - \tilde{y}_1(k + 2)) + k_{1,1}(\hat{y}_1(k + 1) - \tilde{y}_1(k + 1)) + k_{1,0}(\hat{y}_1(k) - \tilde{y}_1(k))$$

$$= [\hat{y}_1(k + 3) + k_{1,2}\hat{y}_1(k + 2) + k_{1,1}\hat{y}_1(k + 1) + k_{1,0}\hat{y}_1(k)] - [k_{1,2}\tilde{y}_1(k + 2) + k_{1,1}\tilde{y}_1(k + 1)]$$

$$= [K_{e1}\hat{y}_1^*(k)] - [k_{1,2}(K_{f,1}^2 F_k + K_{d,1}^2 \hat{d}(k)) + k_{1,1}(K_{f,1}^1 F_k + K_{d,1}^1 \hat{d}(k))]$$

$$= K_{e1}\hat{y}_1^*(k) - K_{df,1}F_k - K_{dd,1}\hat{d}(k)$$

$$\widetilde{y}_2(k+2) = \hat{y}_2(k+2) + k_{2,1}(\hat{y}_2(k+1) - \widetilde{y}_2(k+1)) + k_{2,0}(\hat{y}_2(k) - \widetilde{y}_2(k))$$

$$= [\hat{y}_2(k+2) + k_{2,1}\hat{y}_2(k+1) + k_{2,0}\hat{y}_2(k)] - [k_{2,1}\widetilde{y}_2(k+1)]$$

$$= [K_{e2}\hat{y}_2^*(k)] - [k_{2,1}(K_{f,2}^1 F_k + K_{d,2}^1 \hat{d}(k))]$$

$$= K_{e2}\hat{y}_2^*(k) - K_{df,2}F_k - K_{dd,2}\hat{d}(k)$$

$$\widetilde{y}_3(k+2) = \hat{y}_3(k+2) + k_{3,1}(\hat{y}_3(k+1) - \widetilde{y}_3(k+1)) + k_{3,0}(\hat{y}_3(k) - \widetilde{y}_3(k))$$

$$= [\hat{y}_3(k+2) + k_{3,1}\hat{y}_3(k+1) + k_{3,0}\hat{y}_3(k)] - [k_{3,1}\widetilde{y}_3(k+1)]$$

$$= [K_{e3}\hat{y}_3^*(k)] - [k_{3,1}(K_{f,3}^1 F_k + K_{d,3}^1 \hat{d}(k))]$$

$$= K_{e3}\hat{y}_3^*(k) - K_{df,3}F_k - K_{dd,3}\hat{d}(k)$$

Where

$$K_{e1} = \begin{bmatrix} 1 & k_{1,2} & k_{1,1} & k_{1,0} \end{bmatrix}, \quad \hat{y}_1^*(k) = \begin{bmatrix} y_{r1}(k) - y_1(k) \\ y_{r1}(k) - y_1(k) \\ y_{r1}(k) - y_1(k) \\ y_{r1}(k) - y_1(k) \end{bmatrix} + \begin{bmatrix} \alpha_1^3 \widetilde{y}_{r1}(k) \\ \alpha_1^2 \widetilde{y}_{r1}(k) \\ \alpha_1 \widetilde{y}_{r1}(k) \\ 0 \end{bmatrix},$$

$$K_{df,1} = (k_{1,2}K_{f,1}^2 + k_{1,1}K_{f,1}^1).$$

$$K_{dd,1} = (k_{1,2}K_{d,1}^2 + k_{1,1}K_{d,1}^1);$$

$$K_{e2} = \begin{bmatrix} 1 & k_{2,1} & k_{2,0} \end{bmatrix}, \quad \hat{y}_2^*(k) = \begin{bmatrix} y_{r2}(k) - y_2(k) \\ y_{r2}(k) - y_2(k) \\ y_{r2}(k) - y_2(k) \end{bmatrix} + \begin{bmatrix} \alpha_2^2 \widetilde{y}_{r2}(k) \\ \alpha_2 \widetilde{y}_{r2}(k) \\ 0 \end{bmatrix}, \quad K_{df,2} = k_{2,1}K_{f,2}^1,$$

$$K_{dd,2} = k_{2,1}K_{d,2}^1;$$

$$K_{e3} = \begin{bmatrix} 1 & k_{3,1} & k_{3,0} \end{bmatrix}, \quad \hat{y}_3^*(k) = \begin{bmatrix} y_{r3}(k) - y_3(k) \\ y_{r3}(k) - y_3(k) \\ y_{r3}(k) - y_3(k) \end{bmatrix} + \begin{bmatrix} \alpha_3^2 \tilde{y}_{r3}(k) \\ \alpha_3 \tilde{y}_{r3}(k) \\ 0 \end{bmatrix}, \quad K_{df,3} = k_{3,1} K_{f,3}^1,$$

$$K_{dd,3} = k_{3,1} K_{d,3}^1.$$

If $y_{ri}(k)$ is con--stant,

$$\hat{y}_1^*(k) = \begin{bmatrix} y_{r1}(k) - y_1(k) \\ y_{r1}(k) - y_1(k) \\ y_{r1}(k) - y_1(k) \\ y_{r1}(k) - y_1(k) \end{bmatrix}, \quad \hat{y}_2^*(k) = \begin{bmatrix} y_{r2}(k) - y_2(k) \\ y_{r2}(k) - y_2(k) \\ y_{r2}(k) - y_2(k) \end{bmatrix}, \quad \hat{y}_3^*(k) = \begin{bmatrix} y_{r3}(k) - y_3(k) \\ y_{r3}(k) - y_3(k) \\ y_{r3}(k) - y_3(k) \end{bmatrix}.$$

Note that the free response $y_i^f$ is not dependent on $\tilde{u}(k)$, only depend on $F_k$ and $\hat{d}(k)$. Further the desired controlled output response in a compact way,

$$\tilde{y}(k + Rd) = K_{RE} \hat{y}^*(k) - K_{df} F_k - K_{dd} \hat{d}(k))$$

Where

$$K_{RE} = \begin{bmatrix} K_{e1} & 0 & 0 \\ 0 & K_{e2} & 0 \\ 0 & 0 & K_{e3} \end{bmatrix}, \quad \hat{y}^*(k) = \begin{bmatrix} \hat{y}_1^*(k) \\ \hat{y}_2^*(k) \\ \hat{y}_3^*(k) \end{bmatrix}, \quad K_{df} = \begin{bmatrix} K_{df,1} \\ K_{df,2} \\ K_{df,3} \end{bmatrix}, \quad K_{dd} = \begin{bmatrix} K_{dd,1} \\ K_{dd,2} \\ K_{dd,3} \end{bmatrix}$$

Define the pseudo input as:

$$\dot{v}_i(k) = K_{RE}(i,i) \hat{y}_i^*(k)$$

Compare the above desired controlled output response with the current controlled output response, the primary decoupling control based on dynamics inversion is obtained below:

$$E \; \tilde{u}(k) = \dot{v}(k) - (K_{df} + K_f) F_k - (K_{dd} + K_d) \hat{d}(k)$$

$$\tilde{u}(k) = K_V \dot{v}(k) + K_F F_k + K_D \hat{d}(k)$$

The resulting control decouples the SISO loop $\dot{v}_i \to y_i$ from SISO loop $\dot{v}_j \to y_j$, $j \neq i$, therefore each output is tracking its own reference, i.e., being controlled by its own reference only.

## The New Controlled Plantbased on Primary Control for Constraint Control

Substitute the primary decoupling control law into the original controlled plant, yields the decoupled new controlled plant:

$$\tilde{x}(k+1) = A\tilde{x}(k) + B_d\tilde{d}(k) + BK_V\dot{v}(k) + (BK_F + I)F_k + BK_D\hat{d}(k)$$

$$\tilde{y}(k) = C\tilde{x}(k) + D_d\tilde{d}(k)$$

$$\tilde{y}_c(k) = C_c\tilde{x}(k) + D_{cd}\tilde{d}(k)$$

$$\tilde{u}(k) = K_V\dot{v}(k) + K_F F_k + K_D\hat{d}(k)$$

When the same control handle $\tilde{u}(k)$ is needed to enforce certain selected active constraint(s) while remaining the primary output tracking impacted least, the certain one(s) of primary output tracking will be traded off by switching to the selected most limiting control mode instead of allowing its reference to be altered via adding $\Delta y_r(k)$ to $y_r(k)$. For the new controlled plant, the control input is $\dot{v}$.

## The Constraint Decoupling Control based on the New Controlled Plant

The new controlled plant is:

$$\tilde{x}(k+1) = A\tilde{x}(k) + F_k^c + B_v\dot{v}(k) + B_d^c\hat{d}(k) + B_d\tilde{d}(k)$$

$$\tilde{y}_c(k) = C_c\tilde{x}(k) + D_{cd}\tilde{d}(k)$$

Current constraint output responses are, respectively,

$$\tilde{y}_{ci}(k+1) = C_{ci}A\tilde{x}(k) + C_{ci}B_v\dot{v}(k) + C_{ci}F_k^c + C_i(B_d^c\hat{d}(k) + B_d\tilde{d}(k)) + D_{cdi}\tilde{d}(k+1)$$

$$= C_{ci}F_k^c + (C_iB_d^c + D_{cdi})\hat{d}(k) = K_{cfp,i}^1 F_k^c + K_{cd,i}^1\hat{d}(k) = K_{cf,i}^1 F_k + K_{cd,i}^1\hat{d}(k),$$

Since

$$F_k^c = (I + B_u K_F)F_k, \quad K_{cfp,i}^1(I + B_u K_F) = K_{cf,i}^1$$

$$\widetilde{y}_{ci}(k+2) = C_{ci}A^2\widetilde{x}(k) + C_{ci}AB_v\dot{v}(k) + C_{ci}(A+I)F_k^c + C_{ci}A(B_d^c\hat{d}(k) + B_d\widetilde{d}(k)) + \dots$$

$$+ C_{ci}(B_d^c\hat{d}(k+1) + B_d\widetilde{d}(k+1)) + D_{cdi}\widetilde{d}(k+2)$$

$$= C_{ci}(A+I)F_k^c + (C_{ci}AB_d^c + C_{ci}B_d^c + C_{ci}B_d + 2D_{di})\hat{d}(k) = K_{cfp,i}^2 F_k^c + K_{cd,i}^2\hat{d}(k) = K_{cf,i}^2 F_k^c + K_{cd,i}^2\hat{d}(k)$$

$$\dots$$

$$\widetilde{y}_{ci}(k+3) = C_{ci}A^3\widetilde{x}(k) + C_{ci}A^2B_v\dot{v}(k) + C_{ci}(A^2+A+I)F_k^c + \cdots$$

$$+ [C_{ci}A^2(B_d^c\hat{d}(k) + B_d\widetilde{d}(k)) + C_i A(B_d^c\hat{d}(k+1) + B_d\widetilde{d}(k+1)) + C_i(B_d^c\hat{d}(k+2) + B_d\widetilde{d}(k+2)) + D_{cdi}\widetilde{d}(k+$$

$$= C_{ci}A^2B_v\dot{v}(k) + C_{ci}(A^2+A+I)F_k^c + (C_{ci}A^2B_d^c + C_{ci}A(B_d^c + B_d) + 2C_{ci}(B_d^c + B_d) + 3D_{cdi})\hat{d}(k)$$

$$= E_{ci}\dot{v}(k) + K_{cfp,i}F_k^c + K_{cd,i}\hat{d}(k) = E_{ci}\dot{v}(k) + K_{cf,i}F_k^c + K_{cd,i}\hat{d}(k),$$

Where

$$E_{ci} = C_{ci}A^{Rd_i-1}B_v, \quad K_{cfp,i} = C_{ci}(A^{Rd_i-1} + \cdots + A + I),$$

$$K_{cd,i} = C_{ci}A^{Rd_i-1}B_d^c + C_{ci}A^{Rd_i-2}(B_d^c + B_d) + \cdots + (Rd_i-1)\cdot C_{ci}(B_d^c + B_d) + Rd_i \cdot D_{cdi}.$$

$$\begin{bmatrix} \widetilde{y}_{c1}(k+3) \\ \widetilde{y}_{c2}(k+2) \\ \widetilde{y}_{c3}(k+2) \\ \widetilde{y}_{c4}(k+2) \end{bmatrix} = \begin{bmatrix} C_{c1}A^2B_v \\ C_{c2}AB_v \\ C_{c3}AB_v \\ C_{c4}AB_v \end{bmatrix}\dot{v}(k) + \begin{bmatrix} C_{c1}(A^2+A+I) \\ C_{c2}(A+I) \\ C_{c3}(A+I) \\ C_{c4}(A+I) \end{bmatrix}F_k^c + \begin{bmatrix} C_{c1}(A^2B_d^c + (A+2I)(B_d^c + B_d)) + 3D_{cd1} \\ C_{c2}(AB_d^c + (B_d^c + B_d)) + 2D_{cd2} \\ C_{c3}(AB_d^c + (B_d^c + B_d)) + 2D_{cd3} \\ C_{c4}(AB_d^c + (B_d^c + B_d)) + 2D_{cd4} \end{bmatrix}\hat{d}(k)$$

$$= E_c\dot{v}(k) + K_{cfp}(I + B_uK_F)F_k + K_{cd}\hat{d}(k)$$

$$= E_c\dot{v}(k) + K_{cf}F_k + K_{cd}\hat{d}(k)$$

In general, the desired constraint response is to assure the tracking error and its derivatives (up to the constraint's relative degree) go to zero, let

$$\hat{y}_{ci}(k+j) = y_{rci}(k+j) - y_{ci}(k), \quad i = 1,..,4; j = 0,1,\cdots,Rd_{ci},$$

$$(\hat{y}_{c1}(k+3) - \widetilde{y}_{c1}(k+3)) + k_{c1,2}(\hat{y}_{c1}(k+2) - \widetilde{y}_{c1}(k+2)) + k_{c1,1}(\hat{y}_{c1}(k+1) - \widetilde{y}_{c1}(k+1)) + k_{c1,0}(\hat{y}_{c1}(k) - \widetilde{y}_{c1}$$

$$(\hat{y}_{c2}(k+2) - \widetilde{y}_{c2}(k+2)) + k_{c2,1}(\hat{y}_{c2}(k+1) - \widetilde{y}_{c2}(k+1)) + k_{c2,0}(\hat{y}_{c2}(k) - \widetilde{y}_{c2}(k)) = 0$$

$$(\hat{y}_{c3}(k+2) - \widetilde{y}_{c3}(k+2)) + k_{c3,1}(\hat{y}_{c3}(k+1) - \widetilde{y}_{c3}(k+1)) + k_{c3,0}(\hat{y}_{c3}(k) - \widetilde{y}_{c3}(k)) = 0$$

$$(\hat{y}_{c4}(k+2) - \widetilde{y}_{c4}(k+2)) + k_{c4,1}(\hat{y}_{c4}(k+1) - \widetilde{y}_{c4}(k+1)) + k_{c4,0}(\hat{y}_{c4}(k) - \widetilde{y}_{c4}(k)) = 0$$

Properly choose the above coefficients $k_{ci,j}, i = 1,...,4; j = 0,\cdots,Rd_{ci}-1$ such that the eigenvalues of the following polynomial

$$\rho^{Rd_{ci}} + \cdots + k_{ci,j}\rho^{j} + \cdots + k_{ci,1}\rho + k_{ci,0} = 0$$

are all within the unit circle, then the constraint output tracking dynamics is asymptotically stable.

The desired constraint output tracking response:

$$\begin{aligned}
\tilde{y}_{c1}(k+3) &= \hat{y}_{c1}(k+3) + k_{c1,2}(\hat{y}_{c1}(k+2) - \tilde{y}_{c1}(k+2)) + k_{c1,1}(\hat{y}_{c1}(k+1) - \tilde{y}_{c1}(k+1)) + k_{c1,0}(\hat{y}_{c1}(k) - \tilde{y}_{c1}(k)) \\
&= [\hat{y}_{c1}(k+3) + k_{c1,2}\hat{y}_{c1}(k+2) + k_{c1,1}\hat{y}_{c1}(k+1) + k_{c1,0}\hat{y}_{c1}(k)] - [k_{c1,2}\tilde{y}_{c1}(k+2) + k_{c1,1}\tilde{y}_{c1}(k+1)] \\
&= [K_{ce1}\hat{y}_{c1}^{*}(k)] - [k_{c1,2}(K_{cf,1}^{2}F_{k} + K_{cd,1}^{2}\hat{d}(k)) + k_{c1,1}(K_{cf,1}^{1}F_{k} + K_{cd,1}^{1}\hat{d}(k))] \\
&= K_{ce1}\hat{y}_{1}^{*}(k) - K_{cdf,1}F_{k} - K_{cdd,1}\hat{d}(k)
\end{aligned}$$

$$\begin{aligned}
\tilde{y}_{c2}(k+2) &= \hat{y}_{c2}(k+2) + k_{c2,1}(\hat{y}_{c2}(k+1) - \tilde{y}_{c2}(k+1)) + k_{c2,0}(\hat{y}_{c2}(k) - \tilde{y}_{c2}(k)) \\
&= [\hat{y}_{c2}(k+2) + k_{c2,1}\hat{y}_{c2}(k+1) + k_{c2,0}\hat{y}_{c2}(k)] - [k_{c2,1}\tilde{y}_{c2}(k+1)] \\
&= [K_{ce2}\hat{y}_{c2}^{*}(k)] - [k_{c2,1}(K_{cf,2}^{1}F_{k} + K_{cd,2}^{1}\hat{d}(k))] \\
&= K_{ce2}\hat{y}_{c2}^{*}(k) - K_{cdf,2}F_{k} - K_{cdd,2}\hat{d}(k)
\end{aligned}$$

$$\begin{aligned}
\tilde{y}_{c3}(k+2) &= \hat{y}_{c3}(k+2) + k_{c3,1}(\hat{y}_{c3}(k+1) - \tilde{y}_{c3}(k+1)) + k_{c3,0}(\hat{y}_{c3}(k) - \tilde{y}_{c3}(k)) \\
&= [\hat{y}_{c3}(k+2) + k_{c3,1}\hat{y}_{c3}(k+1) + k_{c3,0}\hat{y}_{c3}(k)] - [k_{c3,1}\tilde{y}_{c3}(k+1)] \\
&= [K_{ce3}\hat{y}_{c3}^{*}(k)] - [k_{c3,1}(K_{cf,3}^{1}F_{k} + K_{cd,3}^{1}\hat{d}(k))] \\
&= K_{ce3}\hat{y}_{c3}^{*}(k) - K_{cdf,3}F_{k} - K_{cdd,3}\hat{d}(k)
\end{aligned}$$

$$\begin{aligned}
\tilde{y}_{c4}(k+2) &= \hat{y}_{c4}(k+2) + k_{c4,1}(\hat{y}_{c4}(k+1) - \tilde{y}_{c4}(k+1)) + k_{c4,0}(\hat{y}_{c4}(k) - \tilde{y}_{c4}(k)) \\
&= [\hat{y}_{c4}(k+2) + k_{c4,1}\hat{y}_{c4}(k+1) + k_{c4,0}\hat{y}_{c4}(k)] - [k_{c4,1}\tilde{y}_{c4}(k+1)] \\
&= [K_{ce4}\hat{y}_{c4}^{*}(k)] - [k_{c4,1}(K_{cf,4}^{1}F_{k} + K_{cd,4}^{1}\hat{d}(k))] \\
&= K_{ce4}\hat{y}_{c4}^{*}(k) - K_{cdf,4}F_{k} - K_{cdd,4}\hat{d}(k)
\end{aligned}$$

Where consider constraint references as constant,

$$K_{ce1} = \begin{bmatrix} 1 & k_{c1,2} & k_{c1,1} & k_{c1,0} \end{bmatrix}, \quad \hat{y}_{c1}^*(k) = \begin{bmatrix} y_{rc1}(k) - y_{c1}(k) \\ y_{rc1}(k) - y_{c1}(k) \\ y_{rc1}(k) - y_{c1}(k) \\ y_{rc1}(k) - y_{c1}(k) \end{bmatrix},$$

$$K_{cdf,1} = (k_{c1,2} K_{cf,1}^2 + k_{c1,1} K_{cf,1}^1),$$

$$K_{cdd,1} = (k_{c1,2} K_{cd,1}^2 + k_{c1,1} K_{cd,1}^1),$$

$$K_{ce2} = \begin{bmatrix} 1 & k_{c2,1} & k_{c2,0} \end{bmatrix}, \quad \hat{y}_{c2}^*(k) = \begin{bmatrix} y_{rc2}(k) - y_{c2}(k) \\ y_{rc2}(k) - y_{c2}(k) \\ y_{rc2}(k) - y_{c2}(k) \end{bmatrix}, \quad K_{cdf,2} = k_{c2,1} K_{cf,2}^1,$$

$$K_{cdd,2} = k_{c2,1} K_{cd,2}^1,$$

$$K_{ce3} = \begin{bmatrix} 1 & k_{c3,1} & k_{c3,0} \end{bmatrix}, \quad \hat{y}_{c3}^*(k) = \begin{bmatrix} y_{rc3}(k) - y_{c3}(k) \\ y_{rc3}(k) - y_{c3}(k) \\ y_{rc3}(k) - y_{c3}(k) \end{bmatrix}, \quad K_{cdf,3} = k_{c3,1} K_{cf,3}^1,$$

$$K_{cdd,3} = k_{c3,1} K_{cd,3}^1,$$

$$K_{ce4} = \begin{bmatrix} 1 & k_{c4,1} & k_{c4,0} \end{bmatrix}, \quad \hat{y}_{c4}^*(k) = \begin{bmatrix} y_{rc4}(k) - y_{c4}(k) \\ y_{rc4}(k) - y_{c4}(k) \\ y_{rc4}(k) - y_{c4}(k) \end{bmatrix}, \quad K_{cdf,4} = k_{c4,1} K_{cf,4}^1,$$

$$K_{cdd,4} = k_{c4,1} K_{cd,4}^1$$

Further the desired constraint output response in a compact way,

$$\tilde{y}_c(k + Rd_c) = K_{cRE} \hat{y}_c^*(k) - K_{cdf} F_k - K_{cdd} \hat{d}(k)$$

Where

$$K_{cRE} = \begin{bmatrix} K_{ce1} & 0 & 0 & 0 \\ 0 & K_{ce2} & 0 & 0 \\ 0 & 0 & K_{ce3} & 0 \\ 0 & 0 & 0 & K_{ce4} \end{bmatrix}, \quad \hat{y}_c^*(k) = \begin{bmatrix} \hat{y}_{c1}^*(k) \\ \hat{y}_{c2}^*(k) \\ \hat{y}_{c3}^*(k) \\ \hat{y}_{c4}^*(k) \end{bmatrix}, \quad K_{cdf} = \begin{bmatrix} K_{cdf,1} \\ K_{cdf,2} \\ K_{cdf,3} \\ K_{cdf,4} \end{bmatrix}, \quad K_{cdd} = \begin{bmatrix} K_{cdd,1} \\ K_{cdd,2} \\ K_{cdd,3} \\ K_{cdd,4} \end{bmatrix}$$

Compare the above desired constraint output response with the current constraint output response, yields,

$$E_c \dot{v}(k) = K_{cRE} \hat{y}_c^*(k) - (K_{cdf} F_k + K_{cdd} \hat{d}(k)) - (K_{cf} F_k + K_{cd} \hat{d}(k))$$

$$= K_{cRE} \hat{y}_c^*(k) - (K_{cdf} + K_{cf}) F_k - (K_{cdd} + K_{cd}) \hat{d}(k)$$

$$= K_{cRE} \hat{y}_c^*(k) + K_{cF} F_k + K_{cD} \hat{d}(k)$$

$$\begin{bmatrix} e_{c11} & e_{c12} & e_{c13} \\ e_{c21} & e_{c22} & e_{c23} \\ e_{c31} & e_{c32} & e_{c33} \\ e_{c41} & e_{c42} & e_{c43} \end{bmatrix} \begin{bmatrix} \dot{v}_1(k) \\ \dot{v}_2(k) \\ \dot{v}_3(k) \end{bmatrix} = \begin{bmatrix} K_{ce1} \hat{y}_{c1}^* \\ K_{ce2} \hat{y}_{c2}^* \\ K_{ce3} \hat{y}_{c3}^* \\ K_{ce4} \hat{y}_{c4}^* \end{bmatrix} + \begin{bmatrix} K_{cF}(1,:) F_k \\ K_{cF}(2,:) F_k \\ K_{cF}(3,:) F_k \\ K_{cF}(4,:) F_k \end{bmatrix} + \begin{bmatrix} K_{cD}(1,:) \hat{d}_k \\ K_{cD}(2,:) \hat{d}_k \\ K_{cD}(3,:) \hat{d}_k \\ K_{cD}(4,:) \hat{d}_k \end{bmatrix} = \begin{bmatrix} M_{p,k}(1) \\ M_{p,k}(2) \\ M_{p,k}(3) \\ M_{p,k}(4) \end{bmatrix}$$

The decoupling matrix $E_c$ between $y_c$ and the pseudo input $\dot{v}$ is derived based on the constraint controlled plant shaped by the primary control, using generic form,

$$E_c \dot{v}(k) = M_p$$

$$\begin{bmatrix} e_{c11} & e_{c12} & e_{c13} \\ e_{c21} & e_{c22} & e_{c23} \\ e_{c31} & e_{c32} & e_{c33} \\ e_{c41} & e_{c42} & e_{c43} \end{bmatrix} \begin{bmatrix} \dot{v}_1 \\ \dot{v}_2 \\ \dot{v}_3 \end{bmatrix} = \begin{bmatrix} M_{p1} \\ M_{p2} \\ M_{p3} \\ M_{p4} \end{bmatrix}$$

### Physics Based Constraint Subset Classification

Based on plant (for example, engine) dynamics knowledge learned from cycle partial studies and tests, assume that there are two subsets for the concerned constraints based on effective control modes, corresponding to the two primary control outputs to be traded off, respectively:

$$y_1 - subset: \ \{y_{c1}, y_{c2}\}$$

$$y_2 - subset: \ \{y_{c3}, y_{c4}\}$$

Based on the above defined problem, the constraint control decoupling constraints from the non-traded off controlled output $y_3$ is:

$$\begin{bmatrix} e_{c11} & e_{c12} \\ e_{c21} & e_{c22} \\ e_{c31} & e_{c32} \\ e_{c41} & e_{c42} \end{bmatrix} \begin{bmatrix} \dot{v}_1 \\ \dot{v}_2 \end{bmatrix} = M_p - E_c(:,3) \cdot \dot{v}_3 = \begin{bmatrix} M_{p1} \\ M_{p2} \\ M_{p3} \\ M_{p4} \end{bmatrix} - \begin{bmatrix} e_{c13} \\ e_{c23} \\ e_{c33} \\ e_{c43} \end{bmatrix} \dot{v}_3 = \begin{bmatrix} M_p^{d_3}(1) \\ M_p^{d_3}(2) \\ M_p^{d_3}(3) \\ M_p^{d_3}(4) \end{bmatrix} = M_p^{d_3}$$

## Constraint Controller Set Determined by Constraint Subset

The physics-based classification of the above constraints determines not only the constraint controller subsets but also the primary control traded-off target for each subset. The details are: (a) The constraints classification should be physics-based, that is, for a given primary control output, the projection of each constraint in its associated constraint subset along the primary control output dimension (or direction) should be the dominant part of the constraint. In layman words, with respect to a given primary control reference, the (b) The total number of constraint subsets is less than or equal to the primary control handles; (c) The constraints in each subset are only to be mapped to one specified primary control trade-off target.

## Decoupled SISO Constraint Controllers

Without loss of generality and clear formulation, assume that the concerned constraints are active either in single subset only or in two subsets at same time, and they are classified as:

$$y_1 - \text{subset:} \ \{y_{c1}, y_{c2}\}, \ y_2 - \text{subset:} \ \{y_{c3}, y_{c4}\}.$$

All possible cases may be the following:

$$\{y_{c1}\}, \ \{y_{c2}\}, \ \{y_{c3}\}, \ \{y_{c4}\}, \ \{y_{c1}, y_{c3}\}, \ \{y_{c1}, y_{c4}\}, \ \{y_{c2}, y_{c3}\}, \ \{y_{c2}, y_{c4}\},$$

It follows that at same time, the following constraint controllers need to be run in parallel.

Constraint controllers for two subset cases are derived below:

$$\begin{bmatrix} e_{c11} & e_{c12} \\ e_{c31} & e_{c32} \end{bmatrix} \begin{bmatrix} \dot{v}_1 \\ \dot{v}_2 \end{bmatrix} = \begin{bmatrix} M_p^{d_3}(1) \\ M_p^{d_3}(3) \end{bmatrix}$$

$$\begin{bmatrix} e_{c11} & e_{c12} \\ e_{c41} & e_{c42} \end{bmatrix} \begin{bmatrix} \dot{v}_1 \\ \dot{v}_2 \end{bmatrix} = \begin{bmatrix} M_p^{d_3}(1) \\ M_p^{d_3}(4) \end{bmatrix}$$

$$\begin{bmatrix} e_{c21} & e_{c22} \\ e_{c31} & e_{c32} \end{bmatrix} \begin{bmatrix} \dot{v}_1 \\ \dot{v}_2 \end{bmatrix} = \begin{bmatrix} M_p^{d_3}(2) \\ M_p^{d_3}(3) \end{bmatrix}$$

$$\begin{bmatrix} e_{c21} & e_{c22} \\ e_{c41} & e_{c42} \end{bmatrix} \begin{bmatrix} \dot{v}_1 \\ \dot{v}_2 \end{bmatrix} = \begin{bmatrix} M_p^{d_3}(2) \\ M_p^{d_3}(4) \end{bmatrix}$$

Define

$$\left(E_c^{1,3}\right)^{-1} = \begin{bmatrix} e_{c11} & e_{c12} \\ e_{c31} & e_{c32} \end{bmatrix}^{-1} = \begin{bmatrix} ie_{c11}^{1,3} & ie_{c12}^{1,3} \\ ie_{c21}^{1,3} & ie_{c22}^{1,3} \end{bmatrix} = iE_c^{1,3},$$

$$\left(E_c^{1,4}\right)^{-1} = \begin{bmatrix} e_{c11} & e_{c12} \\ e_{c41} & e_{c42} \end{bmatrix}^{-1} = \begin{bmatrix} ie_{c11}^{1,4} & ie_{c12}^{1,4} \\ ie_{c21}^{1,4} & ie_{c22}^{1,4} \end{bmatrix} = iE_c^{1,4},$$

$$\left(E_c^{2,3}\right)^{-1} = \begin{bmatrix} e_{c21} & e_{c22} \\ e_{c31} & e_{c32} \end{bmatrix}^{-1} = \begin{bmatrix} ie_{c11}^{2,3} & ie_{c12}^{2,3} \\ ie_{c21}^{2,3} & ie_{c22}^{2,3} \end{bmatrix} = iE_c^{2,3},$$

$$\left(E_c^{2,4}\right)^{-1} = \begin{bmatrix} e_{c21} & e_{c22} \\ e_{c41} & e_{c42} \end{bmatrix}^{-1} = \begin{bmatrix} ie_{c11}^{2,4} & ie_{c12}^{2,4} \\ ie_{c21}^{2,4} & ie_{c22}^{2,4} \end{bmatrix} = iE_c^{2,4},$$

Then the constraint controllers that further decouples constraints from one another for two subset cases are:

$$\dot{v}_1^{i,j} = ie_{c11}^{i,j} \cdot M_p^{d_3}(i) + ie_{c12}^{i,j} \cdot M_p^{d_3}(j),$$

$$\dot{v}_2^{i,j} = ie_{c21}^{i,j} \cdot M_p^{d_3}(i) + ie_{c22}^{i,j} \cdot M_p^{d_3}(j)$$

Where $i = 1,2$; $j = 3,4$.

Constraint controllers for single subset cases are derived below:

$$\begin{bmatrix} e_{c11} \\ e_{c21} \end{bmatrix} \dot{v}_1 = M_p^{d_3}(1:2) - E_c(1:2,2) \cdot \dot{v}_2 = \begin{bmatrix} M_p^{d_3}(1) \\ M_p^{d_3}(2) \end{bmatrix} - \begin{bmatrix} e_{c12} \cdot \dot{v}_2 \\ e_{c22} \cdot \dot{v}_2 \end{bmatrix} = M_{p,d_2}^{d_3},$$

$$\begin{bmatrix} e_{c32} \\ e_{c42} \end{bmatrix} \dot{v}_2 = M_p^{d_3}(3:4) - E_c(3:4,1) \cdot \dot{v}_1 = \begin{bmatrix} M_p^{d_3}(3) \\ M_p^{d_3}(4) \end{bmatrix} - \begin{bmatrix} e_{c31} \cdot \dot{v}_1 \\ e_{c41} \cdot \dot{v}_1 \end{bmatrix} = M_{p,d_1}^{d_3},$$

Then the constraint controllers for single subset cases:

$$\dot{v}_1^i = \left(e_{ci,1}\right)^{-1} \cdot M_{p,d_2}^{d_3}(i),$$

$$\dot{v}_2^j = \left(e_{cj,2}\right)^{-1} \cdot M_{p,d_2}^{d_3}(i)$$

where $i = 1,2$; $j = 3,4$.

The MIMO constraint control design method demonstrated for two constraint subsets above is generic, and it can be easily applied to the cases where constraint subsets are more than two.

## Constraint Control Selection Logic

For the problem of multiple variable control with multiple constraints, in general, the multiple constraints can be distributed in two or higher dimensions, i.e., there are two or more subsets of constraints. Further, the to-be-active constraints may be sometimes in one subset only and sometimes in two or more subsets at same time.

Therefore, it is desired that the Selection Logic should process all subsets at each step and the transitions of multi-subsets and single subset. Specifically, in each subset, the Selection Logic selects the multi-subset most limiting constraint from the pseudo inputs resulted from two or more subsets active cases and the single subset most limiting constraint from the pseudo inputs resulted from single subset active case. Then the Selection Logic selects the most limiting constraint from the multi-subset most limiting constraint, the single subset most limiting constraint, and the pseudo input generated by the traded-off controlled output based on pre-determined selection logic, which is determined by the physical relationships between the max/min constraints and the traded-off controlled output. Then in system level, i.e., considering the results from all subsets, the Selection Logic conducts integrated selection to make final decisions which pseudo inputs should be placed to the pseudo input entries.

Considering for a given constraint, single subset case and multi-subsets case cannot happen to it at same time, however it can transition from one to the other, therefore, in a given subset, the single subset case and multi-subsets case need to go through separate selection processes, and the transition will naturally go through by the selection results from system level integrated selection.

An example for demonstration of the selection logic is provided below. The example is associated with $y_1$ and $y_2$ respectively, and each subset has 2 constraints: $y_1$ subset.: {max $y_{c1}$, min $y_{c1}$, min $y_{c2}$}, $y_2$ - subset: {max $y_{c3}$, min $y_{c3}$, min $y_{c4}$}.

Assume that there are two subsets of the concerned constraints, corresponding to two primary control outputs to be traded off, respectively:

$$y_1 - subset: \quad \{y_{c1}, y_{c2}\}$$

$$y_2 - subset: \quad \{y_{c3}, y_{c4}\} \quad \text{i.e.,} \quad \{\max y_{c3}, \min y_{c3}, \max y_{c4}\}$$

and consider {max $y_{c1}$, min $y_{c1}$, min $y_{c2}$} and {max $y_{c3}$, min $y_{c3}$, min $y_{c4}$} case.

Without loss of generality and clear formulation, assume that the concerned constraints are active either in single subset only or in two subsets at same time, all possible cases are given below:
{$y_{c1}$}, {$y_{c2}$}, {$y_{c3}$}, {$y_{c4}$}, {$y_{c1}, y_{c3}$}, {$y_{c1}, y_{c4}$}, {$y_{c2}, y_{c3}$}, {$y_{c2}, y_{c4}$},

Considering the constraints {max $y_{c1}$, min $y_{c1}$, min $y_{c2}$} in $y_1$- *subset* assume that to satisfy **max $y_{c1}$** needs to reduce $y_1$, i.e., $\dot{v}_1^{y_1} < 0$, if **max $y_{c1}$** is violated, it generates $\dot{v}_1^{1+,\bullet} < 0$ or, $\dot{v}_1^{1+} < 0$, therefore, select the minimum value from $\dot{v}_1^{1+,\bullet}$, $\dot{v}_1^{1+}$, and $\dot{v}_1^{y_1}$ can satisfy **max $y_{c1}$**; to satisfy **min $y_{c1}$** needs to increase $y_1$, i.e., $\dot{v}_1^{y_1} > 0$, if **min $y_{c1}$** is violated, it generates $\dot{v}_1^{1-,\bullet} > 0$ or, $\dot{v}_1^{1-} > 0$; to satisfy **min $y_{c2}$** needs to increase $y_1$, i.e., $\dot{v}_1^{y_1} > 0$, if **min $y_{c2}$** is violated, it generates $\dot{v}_1^{2-,\bullet} > 0$ or, $\dot{v}_1^{2-} > 0$, therefore, select the maximum value from $\dot{v}_1^{1-,\bullet}$, $\dot{v}_1^{2-,\bullet}$, $\dot{v}_1^{1-}$, $\dot{v}_1^{2-}$ and $\dot{v}_1^{y_1}$ can satisfy both **min $y_{c1}$** and **min $y_{c2}$**. Also assume that maximum constraint overrules the minimum constraints.

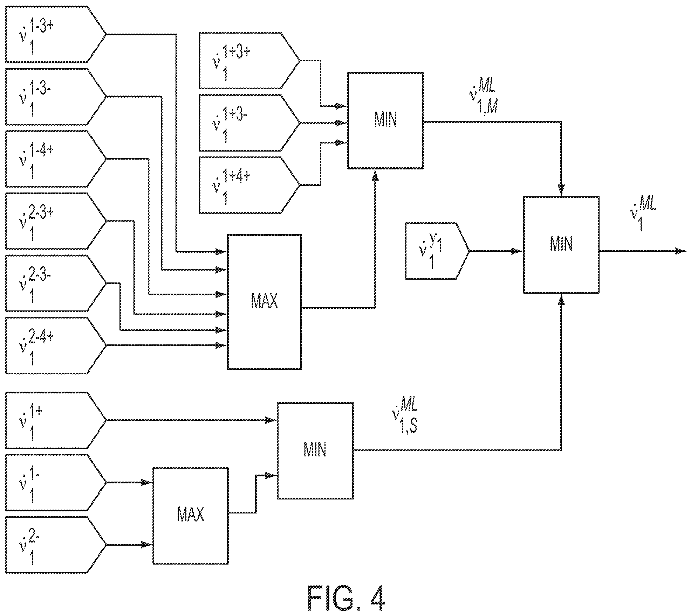

Fig. 4 demonstrates the assumed $y_1$ - *subset* selection logic for {max $y_{c1}$, min $y_{c1}$, min $y_{c2}$}. In smgle subset case, **min $y_{c1}$** and **min $y_{c2}$** generate $\dot{v}_1^{1-}$ and $\dot{v}_1^{2-}$ respectively; **max $y_{c1}$** generates $\dot{v}_1^{1+}$. Applying the assumed relationships for $y_1$ - *subset* aforementioned, the single subset most limiting constraint is

$$\dot{v}_{1,S}^{ML} = \min(\max(\dot{v}_1^{1-}, \dot{v}_1^{2-}), \dot{v}_1^{1+})$$

In multi-subsets case, **min $y_{c1}$** generates $\dot{v}_1^{1-3+}$, $\dot{v}_1^{1-3-}$ and $\dot{v}_1^{1-4+}$, **min $y_{c2}$** generates $\dot{v}_1^{2-3+}$, $\dot{v}_1^{2-3-}$ and $\dot{v}_1^{2-4+}$, **max $y_{c1}$** generates $\dot{v}_1^{1+3+}$, $\dot{v}_1^{1+3-}$, and $\dot{v}_1^{1+4+}$. Applying the assumed relationships aforementioned, the multi-subsets most limiting constraint of is

$$\dot{v}_{1,M}^{ML} = \min(\max(\dot{v}_1^{1-3+}, \dot{v}_1^{1-3-}, \dot{v}_1^{1-4+}, \dot{v}_1^{2-3+}, \dot{v}_1^{2-3-}, \dot{v}_1^{2-4+}), \dot{v}_1^{1+3+}, \dot{v}_1^{1+3-}, \dot{v}_1^{1+4+})$$

the $y_1$ - *subset* most limiting

constraint is: $\dot{v}_1^{ML} = \min(\dot{v}_1^{y_1}, \dot{v}_{1,S}^{ML}, \dot{v}_{1,M}^{ML})$.

Considering the constraints {**max** $y_{c3}$, **min** $y_{c3}$, **max** $y_{c24}$} in $y_2$ - **subset**, assume that to satisfy **max** $y_{c3}$ needs to increase $y_2$, i.e., $\dot{v}_2^{y_2} > 0$, if **max** $y_{c3}$ is violated, it generates $\dot{v}_2^{\bullet,3+} > 0$ or, $\dot{v}_2^{3+} > 0$, to satisfy **max** $y_{c4}$ needs to increase $y_2$, i.e., $\dot{v}_2^{y_2} > 0$, if **max** $y_{c4}$ is violated, it generates $\dot{v}_2^{\bullet,4+} > 0$ or, $\dot{v}_2^{4+} > 0$, therefore, select the maximum value from $\dot{v}_2^{\bullet,3+}$, $\dot{v}_2^{\bullet,4+}$, $\dot{v}_2^{3+}$, $\dot{v}_2^{4+}$ and $\dot{v}_2^{y_2}$ can satisfy both **max** $y_{c3}$ and **max** $y_{c4}$ ; to satisfy **min** $y_{c3}$ needs to reduce $y_2$, i.e., $\dot{v}_2^{y_2} < 0$, if **min** $y_{c3}$ is violated, it generates $\dot{v}_2^{\bullet,3-} < 0$ or, $\dot{v}_2^{3-} < 0$, therefore, select the minimum value from $\dot{v}_2^{\bullet,3-}$, $\dot{v}_2^{3-}$, and $\dot{v}_2^{y_2}$ can satisfy **min** $y_{c3}$. Also assume that maximums overrule the minimum constraint.

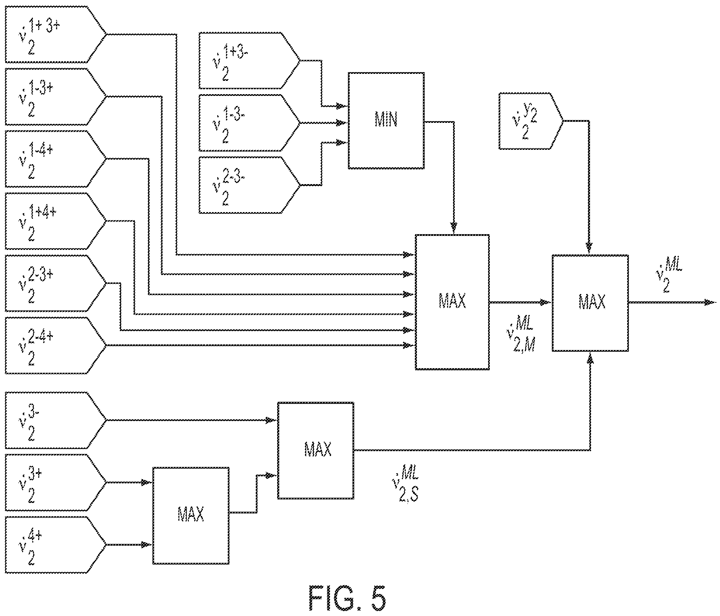

Fig. 5 demonstrates the assumed $y_2$ - **subset** selection logic for {**max** $y_{c3}$, **min** $y_{c3}$, **max** $y_{c24}$}. In single subset case, **max** $y_{c3}$ and **max** $y_{c4}$ generate $\dot{v}_2^{3+}$ and $\dot{v}_2^{4+}$, respectively; **min** $y_{c3}$ generates $\dot{v}_2^{3-}$. Applying the assumed relationships for $y_2$ - **subset** aforementioned, the single subset most limiting constraint is

$$\dot{v}_{2,S}^{ML} = \max(\max(\dot{v}_2^{3+}, \dot{v}_2^{4+}), \dot{v}_2^{3-})$$

In multi-subsets case, **max** $y_{c3}$ generates $\dot{v}_2^{1-3+}$, $\dot{v}_2^{1+3+}$ and $\dot{v}_2^{2-3+}$, **max** $y_{c4}$ generates $\dot{v}_2^{1-4+}$, $\dot{v}_2^{1+4+}$ and $\dot{v}_2^{2-4+}$, **min** $y_{c3}$ generates $\dot{v}_2^{1+3-}$, $\dot{v}_2^{1-3-}$, and $\dot{v}_2^{2-3-}$. Applying the assumed relationships aforementioned, the multi-subsets most limiting constraint is

$$\dot{v}_{2,S}^{ML} = \max(\min(\dot{v}_2^{1+3-}, \dot{v}_2^{1-3-}, \dot{v}_2^{2-3-}), \dot{v}_2^{1+3+}, \dot{v}_2^{1-3+}, \dot{v}_2^{1-4+}, \dot{v}_2^{1+4+}, \dot{v}_2^{2-3+}, \dot{v}_2^{2-4+})$$, the $y_2$ - **subset** most limiting

constraint is: $\dot{v}_2^{ML} = \max(\dot{v}_2^{y_2}, \dot{v}_{2,S}^{ML}, \dot{v}_{2,M}^{ML})$

In system level, considering both subsets $y_1$ - **subset** and $y_2$ - **subset** are active at one time, one of them is active at another time, and the transitions, the integrated selection makes decisions based on the results from the two subsets: $\dot{v}_1^{ML}$, $\dot{v}_1^{y_1}$, $\dot{v}_{1,S}^{ML}$, $\dot{v}_{1,M}^{ML}$, $\dot{v}_2^{ML}$, $\dot{v}_2^{y_2}$, $\dot{v}_{2,S}^{ML}$, $\dot{v}_{2,M}^{ML}$, and desires to make smooth transitions.

Fig. 6 demonstrates the integrated selection logic. The checking conditions are determined by the results from the two subsets: $\dot{v}_1^{ML}$, $\dot{v}_1^{y_1}$, $\dot{v}_{1,S}^{ML}$, $\dot{v}_{1,M}^{ML}$, $\dot{v}_2^{ML}$, $\dot{v}_2^{y_2}$, $\dot{v}_{2,S}^{ML}$, $\dot{v}_{2,M}^{ML}$.

Step 1: If both subsets are active, i.e., the first condition is true, then both $y_1$, and $y_2$ need to be traded off, it follows that $\dot{v}_1^{y_1}$ is replaced by $\dot{v}_{1,M}^{ML}$, and $\dot{v}_2^{y_2}$ replaced by $\dot{v}_{2,M}^{ML}$.

Step 2: If not both subsets are active, check condition 2 - if $y_1$, subset is active only. If condition 2 is true, then this is single subset case, $y_1$ needs to be traded off, and $y_2$ need to stay, it follows that $\dot{v}_1^{y_1}$ is replaced by $\dot{v}_{1,S}^{ML}$, and $\dot{v}_2^{y_2}$ $y_2$ is kept.

Step 3: If condition 2 is not true, check condition 3 - if $y_2$ subset is active only. If condition 3 is true, then this is single subset case, $y_2$ needs to be traded off, and $y_1$, need to stay, it follows that $\dot{v}_2^{y_2}$ is replaced by $\dot{v}_{2,S}^{ML}$ and $\dot{v}_1^{y_1}$ is kept.

Step 4: If condition 3 is not true, then there are no active constraints in both subsets, it follows that $\dot{v}_1^{y_1}$ and $\dot{v}_2^{y_2}$ stay, no primary controlled outputs are traded off.

More specifically, referring to Fig. 6, the algorithm starts at step 20 and proceeds to step 22. At step 22, if

$$\dot{v}_1^{y_1} \neq \dot{v}_1^{ML} \ \&\& \ \dot{v}_2^{y_2} \neq \dot{v}_2^{ML}$$

Then, at step 24,

$$\dot{v}_1 = \dot{v}_1^{ML};$$

$$\dot{v}_2 = \dot{v}_2^{ML};$$ then proceed to end at step 26.

Otherwise the algorithm proceeds to step 28. At step 28, if $\dot{v}_1^{y_1} = \dot{v}_1^{ML}$ &&

$$\dot{v}_2^{y_2} \neq \dot{v}_2^{ML}$$

Then, at step 30,

$$\dot{v}_1 = \dot{v}_1^{y_1};$$

$$\dot{v}_2 = \dot{v}_{2,S}^{ML};$$ then proceed to end at step 26.

Otherwise the algorithm proceeds to step 32. At step 32, if $\dot{v}_1^{y_1} \neq \dot{v}_1^{ML}$ &&

$$\dot{v}_2^{y_2} = \dot{v}_2^{ML}$$

Then, at step 34,

$$\dot{v}_1 = \dot{v}_{1,S}^{ML};$$

$$\dot{v}_2 = \dot{v}_2^{y_2};$$ then proceed to end at step 26.

Otherwise, the algorithm proceeds to step 36, where,

$$\dot{v}_1 = \dot{v}_1^{y_1};$$

$$\dot{v}_2 = \dot{v}_2^{y_2};$$

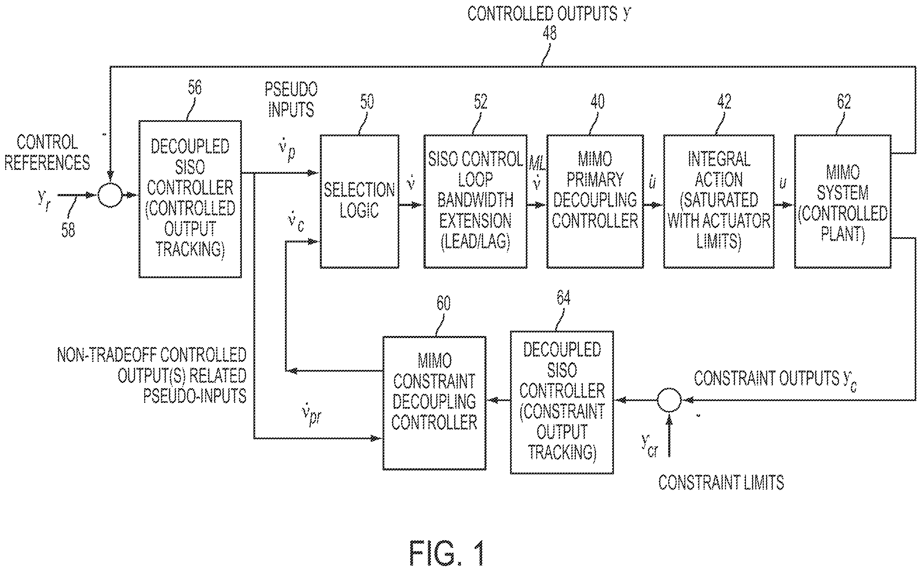

End at step 26.
The architecture of a generic Advanced Multiple Variable Control with High Dimension Multiple Constraints is shown in Fig. 1. It works in the way described below:

(1) A multiple input multiple output (MIMO) primary decoupling controller 40: (a) generates control command derivatives - $\dot{u}$ to the integral action 42; and (b) provides decoupled control (using dynamics inversion or some other

known method) from $\dot{v}$ to $y$. The dynamics of the decoupled controlled plant (from $\dot{v}$ to $y$) are shaped to enable desired robust control of the primary control outputs. The coupled I/O mapping between $\dot{u}$ and $y$ becomes decoupled new I/O mapping between $\dot{v}$ and $y$, and the pseudo input entries $\dot{v}$ provide the common comparable points that the pseudo inputs generated by constraint controllers can be compared with the pseudo inputs generated by primary controlled outputs in accordance with the Selection Logic 50.

(2) A set of SISO lead/lag controllers 52 may be installed upstream of the primary MIMO Primary Decoupling Controller 40 to extend the bandwidths of decoupled primary SISO control loops, providing $\dot{v}*$ to the primary MIMO Primary Decoupling Controller 40. Because this is a common element that would affect the primary and the constraint control, this would also extend the SISO closed loop bandwidth when running to constraints.

(3) A set of decoupled SISO controllers 56 for controlled outputs tracking which receive primary controlled output tracking errors (Control References (58) minus the Controlled Outputs (48)) and provide desired primary controlled output based pseudo inputs $\dot{v}_p$, respectively. Tunes the primary control loops independently of the constraint outputs, so they can be optimized without impacting the characteristics of the constraint control.

(4) A multiple input multiple output (MIMO) constraint decoupling controller 60 that controls the New Controlled Plant formed by the MIMO primary controller 40 and the physical plant 62. The MIMO constraint decoupling controller 60: (a) generates pseudo inputs $\dot{v}_c$ based on the desired constraint responses for the Selection Logic; and (b) decouples the constraints from one another based on the newly shaped controlled plant $\dot{v}$ to $y_c$ and (c) decouples the constraints from the non-traded off primary controlled outputs by rejecting the non-traded off primary controlled outputs as known disturbance inputs $\dot{v}_{pr}$.

(5) A set of decoupled SISO controllers 64 for constraint outputs tracking which receive constraint output tracking errors (Constraint Limits minus Constraint Outputs) and provide desired constrain controlled pseudo inputs $\dot{v}_c$, respectively. Tunes the constraint control loops independently of the primary outputs, so they can be optimized without impacting the characteristics of the primary control.

(6) Selection Logic 50 compares the pseudo inputs generated by every given subset of constraints and the pseudo input generated by the primary controlled output associated with that subset, selects the most limiting constraint for each subset, and makes system level selection integration to determine the final pseudo inputs to go into the SISO Lead/Lag and MIMO Primary Decoupling Controller.

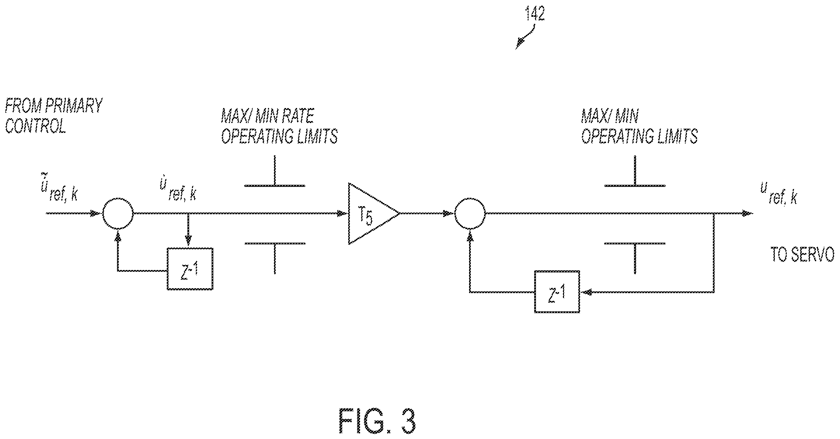

(7) An integral action 42 includes a set of integrators common to both the primary and constraint control. The integral action integrates each $\dot{u}$ into a corresponding $u$ thus forming the reference for each actuator inner loop. Each integrator may be dynamically limited to respect corresponding actuator operating limits. The integrator is shown in Figure 3.

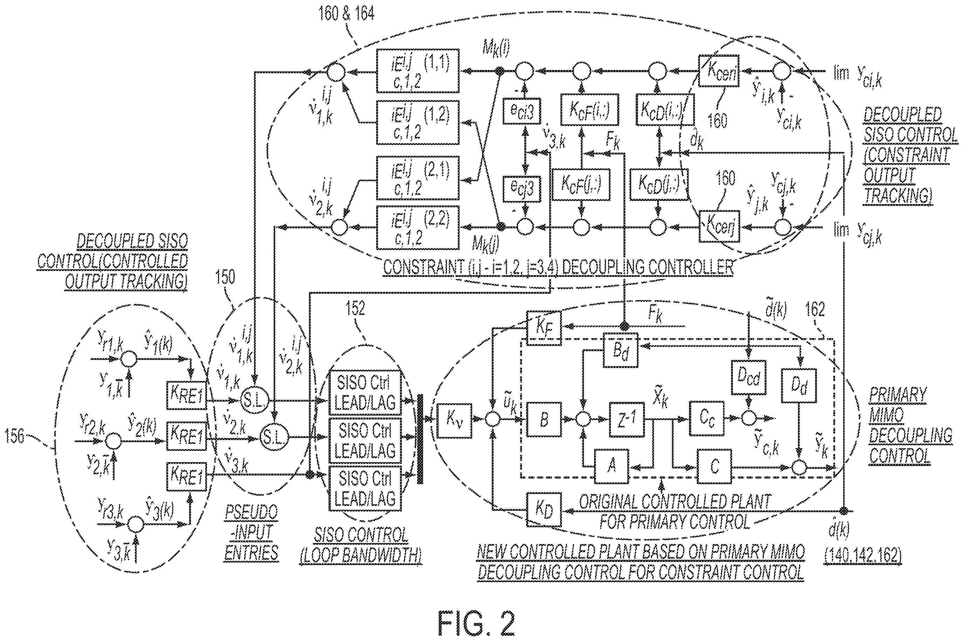

As an example implementation, architecture of a 3x3 Advanced Multiple Variable Control with Two sets of Constraints is shown in Fig. 2 (the elements in Fig. 2 directly or indirectly corresponding to elements in Fig. 1 have the same numerals, but have added one-hundred). It works in the way described below:

(1) 3x3 MIMO primary decoupling controller 140 not only generating control command derivatives - $\dot{u}_1$, $\dot{u}_2$ and $\dot{u}_3$ to the integral action but also shaping the common pseudo input entries - $\dot{v}_1$, $\dot{v}_2$, and based on primary controlled output $y$ ($y_1$, $y_2$, $y_3$) to $\dot{u}$ ($\dot{u}_1$, $\dot{u}_2$, $\dot{u}_3$) dynamics inversion and decoupled primary SISO desired plant dynamics via state feedback such that the coupled I/O mapping between $\dot{u}$ and $y$ becomes decoupled new I/O mapping between $\dot{v}$ and $y$ with desired plant dynamics, and the pseudo input entries $\dot{v}$ provide the common comparable points that the pseudo inputs generated by constraint control can be compared with the pseudo inputs generated by primary control accordingly in Selection Logic.

(2) There are only three control handles in this example, which implies there will be at most three subsets of constraints. In this case, assume two subsets of constraints associated with $y_1$ and $y_2$ respectively, and each subset has two constraints: $y_1$ - subset:

$$\{\max y_{c1}, \min y_{c1}, \min y_{c2}\}, y_2 - \text{subset:} \{\max y_{c3}, \min y_{c3}, \max y_{c4}\}$$

(3) Three SISO lead/lag controllers 152 that is intend to extend the bandwidths of decoupled primary SISO control loops, respectively, also are common to be used by the selected constraints for the same purpose. If the SISO lead/lags are not needed, then they can be set to 1, respectively.

(4) Three decoupled SISO proportional controllers 156 for controlled outputs tracking which receive primary controlled output tracking errors (Control References minus Controlled Outputs) and provide desired primary controlled outputs based pseudo inputs - $\dot{v}_1$, $\dot{v}_2$, and $\dot{v}_3$, respectively. Assumed $y_3$ is not to be traded off, $\dot{v}_3$ will serve as known disturbance input in constraint control; $\dot{v}_1$ and $\dot{v}_2$ will go into Selection Logic 150 to be compared with the pseudo inputs generated by constraint controllers.

(5) A set of 2x2 MIMO constraint decoupling controllers 160 is shown (2x2 is assumed case in this example, any number of such constraint decoupling controllers can be utilized, depending upon the actual control system) to control two subsets of constraints. The constraint decoupling controllers in this example decouple the constraint of subset 1 from constraint of subset 2, respectively, i.e., decoupling $y_{c1}$ from $y_{c3}$, $y_{c1}$ from $y_{c4}$, $y_{c2}$ from $y_{c3}$ $y_{c2}$ from $y_{c4}$, based on constraints $y_c$ to $\dot{v}$ dynamics inversion and decoupled constraint SISO desired dynamics via state feedback,, and decoupling the constraints from the non-traded off primary controlled output $y_3$ by rejecting the known disturbance inputs $\dot{v}_3$, it follows that the resulted four decoupled SISO constraint controllers ( $\left( y_{ci} \rightarrow \dot{v}_1^{\bullet,j} \right)$, $i =$ 1,2; $j = 3,4$) for generating pseudo inputs $\dot{v}_1^{i,j}$ for subset 1 to be compared with $\dot{v}_1$, and four decoupled SISO constraint controllers ( $\left( y_{cj} \rightarrow \dot{v}_2^{i,\bullet} \right)$, $i=1,2; j = 3,4$) for generating pseudo inputs $\dot{v}_2^{i,j}$ for subset 2 to be compared with $\dot{v}_2$. If a constraint has two limits, then the same decoupled SISO constraint controller generates two outputs, that is, two pseudo inputs each corresponds to one limit input; if the constraint has one limit, then the decoupled SISO constraint controller generates one output, that is, one pseudo input. Based on assumptions on constraints in this case, there are following generated pseudo inputs , $\dot{v}_1^{1+,3-}$ , $\dot{v}_1^{1+,3+}$ , $\dot{v}_1^{1-,3+}$ , $\dot{v}_1^{1-,3-}$ $\dot{v}_1^{1+,4+}$ , $\dot{v}_1^{1-,4+}$ , $\dot{v}_1^{2-,3-}$ , $\dot{v}_1^{2+-3+}$ , $\dot{v}_1^{2-,4+}$ in subset 1 to be compared with $\dot{v}_1$; and $\dot{v}_2^{1+,3-}$ , $\dot{v}_2^{1+,3+}$ , $\dot{v}_2^{1-,3+}$ , $\dot{v}_2^{1-,3-}$ $\dot{v}_2^{1+,4+}$ , $\dot{v}_2^{1-,4+}$ , $\dot{v}_2^{2-,3-}$ , $\dot{v}_2^{2+-3+}$ , $\dot{v}_1^{2-,4+}$ in subset 2 to be compared with $\dot{v}_2$.

(6) Four decoupled SISO controllers 164 for constraint outputs tracking which receive constraint output tracking errors (lim $y_{ci}$ - $y_{ci}$, $i = 1,2,3,4$) and shape desired constraint tracking responses, respectively; same constraint with different limits as reference inputs will use the same constraint decoupled SISO controller.

(7) One selection logic 150 for subset 1 and one selection logic 150 for subset 2. Each compares the pseudo inputs generated by the given subset of constraints and the pseudo input generated by the primary controlled output associated with that subset, selects the most limiting constraint for each subset, and determines the final pseudo input to go into the SISO Lead/Lag 152 and MIMO Primary Decoupling Controller 140.

(8) Three common SISO integrators 142 which are not individually shown in Fig. 2 due to limited space. Each integrator works for each decoupled primary SISO loop, generates each $u_i$ from each $\dot{u}_i$, $i =1,2,3$, and passes it to each control handle - actuator inner loop as input command reference accordingly, each integrator is dynamically saturated with the max/min operating range of a given actuator. The integrator 142 is shown in Figure 3.

The common SISO integrator 142 is shown in Fig. 3. (1) Calculate:

$\dot{u}_k = \dot{u}_k + \dot{u}_{k-1}$ according to the perturbation definition; (2) Apply the max/min operating rate limits to $\dot{u}_k$ ; (3) Calculate current step command change: $\Delta u_k = T_s \cdot \dot{u}_k$, where $T_s$ is the sampling time; (4) Calculate current step command: $u_k = \Delta u_k + u_{k-1}$; (5) Apply the max/min operating limits $\dot{u}_k$ as shown in Fig. 4.

Technically, the current approach overcomes the fundamental, longstanding MIMO mode selection challenge of selecting between multiple sets of control modes due to the coupled and confounded set of input variables associated with a coupled complex plant process (for example, a typical gas turbine engine processes). The pseudo inputs from the new controlled plant resulted from the primary control provide MIMO mode selection criteria which have a direct, one-to-one correspondence from a given constraint to the specific performance trade-off decision according to pre-determined rules. This solution preserves SISO-type mode selection simplicity even with high dimension constraints systems. It allows a simple SISO constraint controller or certain simple SISO constraint controllers, selected from multiple constraints, that reconfigure the existing primary MIMO control online by replacing the traded-off output with the selected constraint when a single subset is active or replacing the traded-off outputs with the selected constraints when multiple subsets are active. The resultant design has explicit physical meaning, is simple, deterministic, fundamentally robust, and easily maintainable.

It is to be understood the control system architectures disclosed herein may be provided in any manner known to those of ordinary skill, including software solutions, hardware or firmware solutions, and combinations of such. Such solutions would incorporate the use of appropriate processors, memory (and software embodying any algorithms described herein may be resident in any type of non-transitory memory), circuitry and other components as is known to those of ordinary skill.

**Claims**

1. A multivariable control system of a physical plant with high dimensions multiple constraints problems where trade-off primary control outputs are predetermined based on plant physics and performance requirements, comprising:

   an integral action control unit (42) providing reference values for each actuator inner loop of the physical plant;
   a multiple-input-multiple-output (MIMO) primary decoupling controller (40) decoupling controlled outputs from one another and shaping pseudo inputs/controlled outputs desired plant dynamics and providing control command derivatives to the integral action control unit (42);
   a multiple-input-multiple-output (MIMO) constraint decoupling controller (60) decoupling constraint outputs from one another and from the non-traded off controlled output(s) and shaping pseudo inputs/constraint outputs desired plant dynamics and providing pseudo inputs to a selection logic section (50);
   a set of decoupled single-input-single-output (SISO) controlled output tracking controllers (56) adapted to receive primary controlled output tracking errors and provide pseudo inputs to the selection logic section;
   the selection logic section (50) adapted to compare the pseudo inputs generated by the MIMO constraint decoupling controller (60) and the pseudo inputs generated by the SISO controlled output tracking controllers, and further adapted to select the most limiting constraint to determine the final pseudo inputs to go into the MIMO primary decoupling controller (40); and
   a set of decoupled single-input-single-output (SISO) constraint output tracking controllers (64) adapted to receive constraint output tracking errors and provide the input to the MIMO constraint decoupling controller.

2. The multivariable control system of claim 1, wherein the selection logic section (50) is adapted to compare the pseudo inputs from the MIMO constraint decoupling controller (60) and the pseudo inputs from the SISO controlled output tracking controllers (56) and select the most limiting constraint for each primary SISO control loop and provide them to (SISO) lead/lag controllers (52).

3. The multivariable control system of claim 1, further comprising a set of single-input-single-output (SISO) lead/lag controllers (52) adapted to extend the bandwidths of decoupled primary SISO control loops, providing v-dot-star to the primary decoupling controller (40).

4. The multivariable control system of claim 1, wherein the MIMO constraint decoupling controller (60) is adapted to decouple the constraints from the non-traded off primary controlled outputs by rejecting non-traded off primary controlled outputs as known disturbance inputs.

5. The multivariable control system of claim 1, wherein the MIMO constraint decoupling controller (60) is adapted to decouple constraint outputs from one another, and decouple the constraints from the non-traded off primary controlled outputs.

6. The multivariable control system of claim 1, wherein the constraint output tracking errors are determined, at least in part, based upon the differences between predetermined constraint limits and constraint outputs.

7. A method for multiple variable control of a physical plant with high dimensions multiple constraints problems where trade-off primary control outputs are predetermined based on plant physics and performance requirements, comprising the steps of:

providing an integral action control unit (42), the integral action control unit providing reference values for each actuator inner loop of the physical plant;

providing a multiple-input-multiple-output (MIMO) primary decoupling controller (40), the MIMO primary decoupling controller decoupling controlled outputs from one another and shaping pseudo inputs/controlled outputs desired plant dynamics and providing control command derivatives to the integral action control unit (42);

providing a multiple-input-multiple-output (MIMO) constraint decoupling controller (60), the MIMO constraint decoupling controller decoupling constraint outputs from one another and from the non-traded off controlled output(s) and shaping pseudo inputs/constraint outputs desired plant dynamics and providing pseudo inputs to a selection logic section (50);

providing a set of decoupled single-input-single-output (SISO) controlled output tracking controllers (56), the SISO controlled output tracking controllers receiving primary controlled output tracking errors and providing pseudo inputs to the selection logic section;

providing the selection logic section (50), the selection logic section comparing the pseudo inputs generated by the MIMO constraint decoupling controller (60) and the pseudo inputs generated by the SISO controlled output tracking controllers, the selection logic section further selecting the most limiting constraint to determine the final pseudo input to go into the MIMO primary decoupling controller (40); and

providing a set of decoupled single-input-single-output (SISO) constraint output tracking controllers (64), the SISO) constraint output tracking controllers receiving constraint output tracking errors and providing the inputs to the MIMO constraint decoupling controller.

## Patentansprüche

1.  Mehrfach variables Steuerungssystem einer technischen Anlage mit Problemen von mehreren Einschränkungen in hoher Dimension, wobei der Ausgleich (trade-off) von primären Steuerungsausgängen auf der Grundlage von Anlagentechniken und Leistungsanforderungen vorgegeben ist, wobei das System umfasst:

    eine integrale Aktionssteuerungseinheit (42), die Referenzwerte für jedes Stellglied einer inneren Schleife der technischen Anlage bereitstellt;

    eine primäre Entkopplungssteuereinheit (40) eines Systems mehrfacher-Ein- und Ausgänge (MIMO = Multiple Input, Multiple Output), die gesteuerte Ausgänge voneinander entkoppelt und Pseudoeingänge/gesteuerte Ausgänge der gewünschten Anlagendynamiken modelliert und Ableitungen der Steueranweisung für die integrale Aktionssteuerungseinheit (42) bereitstellt;

    eine Entkopplungssteuereinheit (60) einer Einschränkung eines Systems mehrfacher-Ein- und Ausgänge (MIMO), die Einschränkungsausgänge voneinander und von dem bzw. von den nicht ausgeglichenen (non-traded off) gesteuerten Ausgang bzw. Ausgängen entkoppelt und Pseudoeingänge/Einschränkungsausgänge der gewünschten Anlagendynamiken modelliert und Pseudoeingänge einem Auswahllogikabschnitt (50) bereitstellt;

    einen Satz von entkoppelten, gesteuerten Ausgangsführungssteuereinheiten (56) eines Eingrößensystems mit jeweils nur einem Eingang und einem Ausgang (SISO = Single Input, Single Output), der dafür ausgelegt ist, Führungsfehler eines primär gesteuerten Ausgangs zu empfangen und dem Auswahllogikabschnitt Pseudoeingänge bereitzustellen;

    wobei der Auswahllogikabschnitt (50) dafür ausgelegt ist, die Pseudoeingänge, die von der MIMO-Einschränkungs-Entkopplungssteuereinheit (60) erzeugt werden, und die Pseudoeingänge, die von den SISO-gesteuerten Ausgangsführungssteuereinheiten erzeugt werden, zu vergleichen, und der ferner dafür ausgelegt ist, die am stärksten begrenzende Einschränkung auszuwählen, um die endgültigen Pseudoeingänge zu bestimmen, um in die MIMO-primäre Entkopplungssteuereinheit (40) zu gehen; und

    einen Satz von entkoppelten Ausgangsführungssteuereinheiten (64) eines Eingrößensystems mit jeweils nur einem Eingang und einem Ausgang (SISO) einer Einschränkung, der dafür ausgelegt ist, Führungsfehler eines Einschränkungsausgangs zu empfangen und den Eingang der MIMO-Einschränkungs-Entkopplungssteuereinheit bereitzustellen.

2.  Mehrfach variables Steuerungssystem nach Anspruch 1, wobei der Auswahllogikabschnitt (50) dafür ausgelegt ist, die Pseudoeingänge von der MIMO-Einschränkungs-Entkopplungssteuereinheit (60) und die Pseudoeingänge von den SISO-gesteuerten Ausgangsführungssteuereinheiten (56) zu vergleichen und die am stärksten begrenzende Einschränkung für jeden primären SISO-Steuerkreis auszuwählen und sie den (SISO)-Führungs-/Verzögerungs-Steuereinheiten (52) bereitstellt.

3.  Mehrfach variables Steuerungssystem nach Anspruch 1, das ferner einen Satz von Führungs-/Verzögerungs-Steuereinheiten (52) eines Eingrößensystems mit jeweils nur einem Eingang und einem Ausgang (SISO) umfasst, der dafür ausgelegt ist, die Bandbreiten von entkoppelten primären SISO-Steuerkreisen zu erweitern, und der der primären Entkopplungssteuereinheit (40) einen v-Punkt-Stern bereitstellt.

4. Mehrfach variables Steuerungssystem nach Anspruch 1, wobei die MIMO-Einschränkungs-Entkopplungssteuereinheit (60) dafür ausgelegt ist, die Einschränkungen von den nicht ausgeglichenen (non-traded off) primären gesteuerten Ausgängen zu entkoppeln, indem die nicht ausgeglichenen (non-traded off) primären gesteuerten Ausgänge als bekannte Störeingänge verworfen und abgewiesen werden.

5. Mehrfach variables Steuerungssystem nach Anspruch 1, wobei die MIMO-Einschränkungs-Entkopplungssteuereinheit (60) dafür ausgelegt ist, die Einschränkungsausgänge voneinander zu entkoppeln und die Einschränkungen von den nicht ausgeglichenen (non-traded off) primären gesteuerten Ausgängen zu entkoppeln.

6. Mehrfach variables Steuerungssystem nach Anspruch 1, wobei die Führungsfehler eines Einschränkungsausgangs zumindest teilweise auf der Grundlage der Differenzen zwischen vorgegebenen Einschränkungsgrenzen und Einschränkungsausgängen bestimmt werden.

7. Verfahren für eine mehrfache variable Steuerung einer technischen Anlage mit Problemen von mehreren Einschränkungen in hoher Dimension, wobei der Ausgleich (trade-off) von primären Steuerungsausgängen auf der Grundlage von Anlagentechniken und Leistungsanforderungen vorgegeben ist, wobei das Verfahren die folgenden Schritte umfasst:

Bereitstellen einer integralen Aktionssteuerungseinheit (42), wobei die integrale Aktionssteuerungseinheit Referenzwerte für jedes Stellglied einer inneren Schleife der technischen Anlage bereitstellt;
Bereitstellen einer primären Entkopplungssteuereinheit (40) eines Systems mehrfacher-Ein- und Ausgänge (MIMO), wobei die primäre MIMO-Entkopplungssteuereinheit gesteuerte Ausgänge voneinander entkoppelt und Pseudoeingänge/gesteuerte Ausgänge der gewünschten Anlagendynamiken modelliert und Ableitungen der Steueranweisung für die integrale Aktionssteuerungseinheit (42) bereitstellt;
Bereitstellen einer Entkopplungssteuereinheit (60) einer Einschränkung eines Systems mehrfacher-Ein- und Ausgänge (MIMO), wobei die Entkopplungssteuereinheit einer Einschränkung Einschränkungsausgänge voneinander und von dem bzw. von den nicht ausgeglichenen (non-traded off) gesteuerten Ausgang bzw. Ausgängen entkoppelt und Pseudoeingänge/Einschränkungsausgänge der gewünschten Anlagendynamiken modelliert und Pseudoeingänge einem Auswahllogikabschnitt (50) bereitstellt;
Bereitstellen eines Satzes von entkoppelten, gesteuerten Ausgangsführungssteuereinheiten (56) eines Eingrößensystems mit jeweils nur einem Eingang und einem Ausgang (SISO), wobei die SISO-gesteuerten Ausgangsführungssteuereinheiten Führungsfehler eines primär gesteuerten Ausgangs empfangen und wobei sie dem Auswahllogikabschnitt Pseudoeingänge bereitstellen;
Bereitstellen des Auswahllogikabschnitts (50), wobei der Auswahllogikabschnitt die Pseudoeingänge, die von der MIMO-Einschränkungs-Entkopplungssteuereinheit (60) erzeugt werden, und die Pseudoeingänge, die von den SISO-gesteuerten Ausgangsführungssteuereinheiten erzeugt werden, vergleicht, und wobei der Auswahllogikabschnitt ferner die am stärksten begrenzende Einschränkung auswählt, um die endgültigen Pseudoeingänge zu bestimmen, um in die primäre MIMO-Entkopplungssteuereinheit (40) zu gehen; und
Bereitstellen eines Satzes von entkoppelten Ausgangsführungssteuereinheiten (64) eines Eingrößensystems mit jeweils nur einem Eingang und einem Ausgang (SISO) einer Einschränkung, wobei die SISO-Ausgangsführungssteuereinheiten einer Einschränkung Führungsfehler eines Einschränkungsausgangs empfangen und die Eingänge der MIMO-Einschränkungs-Entkopplungssteuereinheit bereitstellen.

**Revendications**

1. Système de commande de variables multiples d'une installation physique ayant des problèmes de contraintes multiples de grandes dimensions, où des sorties de commande primaires négociées sont prédéterminées sur la base d'exigences physiques et de performances de l'installation, comprenant :

une unité de commande d'action intégrale (42) fournissant des valeurs de référence pour chaque boucle interne d'actionneur de l'installation physique ;
un contrôleur de découplage primaire à entrées multiples et sorties multiples (MIMO) (40) découplant des sorties commandées l'une de l'autre, façonnant une dynamique d'installation souhaitée à pseudo-entrées et sorties commandées et

fournissant des dérivées d'instructions de commande à l'unité de commande d'action intégrale (42) ;

un contrôleur de découplage de contraintes à entrées multiples et sorties multiples (MIMO) (60) découplant des sorties de contraintes l'une de l'autre et de la sortie ou des sorties commandées non négociées, façonnant une dynamique d'installation souhaitée à pseudo-entrées et sorties de contraintes et fournissant des pseudo-entrées à une section logique de sélection (50) ;

un ensemble de contrôleurs de suivi de sorties commandées découplées (56) à entrée unique et sortie unique (SISO) adaptés pour recevoir des erreurs de suivi de sorties primaires commandées et fournir des pseudo-entrées à la section logique de sélection ;

la section logique de sélection (50) étant adaptée pour comparer les pseudo-entrées générées par le contrôleur de découplage de contraintes MIMO (60) et les pseudo-entrées générées par les contrôleurs de suivi de sorties commandées SISO, et adaptée en outre pour sélectionner la contrainte la plus limite pour déterminer les pseudo-entrées finales à aller dans le contrôleur de découplage primaire MIMO (40) ; et

un ensemble de contrôleurs de suivi de sorties de contraintes découplées à entrée unique et sortie unique (SISO) (64) adaptés pour recevoir des erreurs de suivi de sorties de contraintes et fournir l'entrée au contrôleur de découplage de contraintes MIMO.

2. Système de commande à variables multiples selon la revendication 1, dans lequel la section logique de sélection (50) est adaptée pour comparer les pseudo-entrées venant du contrôleur de découplage de contraintes MIMO (60) et les pseudo-entrées venant des contrôleurs de suivi de sorties commandées **SISO** (56) et sélectionner la contrainte la plus limite pour chaque boucle de commande **SISO** primaire et les fournir à des contrôleurs d'avance/retard (SISO) (52).

3. Système de commande à variables multiples selon la revendication 1, comprenant en outre un ensemble de contrôleurs d'avance/retard à entrée unique et sortie unique (SISO) (52) adaptés pour étendre les largeurs de bande de boucles de commande **SISO** primaires découplées, fournissant un point-étoile v au contrôleur de découplage primaire (40).

4. Système de commande à variables multiples selon la revendication 1, dans lequel le contrôleur de découplage de contraintes MIMO (60) est adapté pour découpler les contraintes des sorties primaires commandées non négociées en rejetant les sorties primaires commandées non négociées comme entrées de perturbation connues.

5. Système de commande à variables multiples selon la revendication 1, dans lequel le contrôleur de découplage de contrainte MIMO (60) est adapté pour découpler les sorties de contraintes l'une de l'autre et découpler les contraintes des sorties primaires commandées non négociées.

6. Système de commande à variables multiples selon la revendication 1, dans lequel les erreurs de suivi de sorties de contraintes sont déterminées au moins en partie sur la base des différences entre les limites de contraintes et les sorties de contraintes prédéterminées.

7. Procédé de commande à multiples variables d'une installation physique ayant des problèmes de contraintes multiples de grandes dimensions, où des sorties de commande primaires négociées sont prédéterminées sur la base d'exigences physiques et de performances de l'installation, comprenant les étapes consistant à :

fournir une unité de commande d'action intégrale (42), l'unité de commande d'action intégrale fournissant des valeurs de référence pour chaque boucle interne d'actionneur de l'installation physique ;

fournir un contrôleur de découplage primaire à entrées multiples et sorties multiples (MIMO) (40), le contrôleur de découplage primaire MIMO découplant des sorties commandées l'une de l'autre, façonnant une dynamique d'installation souhaitée à pseudo-entrées et sorties commandées et fournissant des dérivées d'instructions de commande à l'unité de commande d'action intégrale (42) ;

fournir un contrôleur de découplage de contraintes à entrées multiples et sorties multiples (MIMO) (60), le contrôleur de découplage de contraintes découplant des sorties de contraintes l'une de l'autre et de la sortie ou des sorties commandées non négociées, façonnant une dynamique d'installation souhaitée à pseudo-entrées et sorties de contraintes et fournissant des pseudo-entrées à une section logique de sélection (50) ;

fournir un ensemble de contrôleurs de suivi de sorties commandées découplées (56) à entrée unique et sortie unique (SISO), les contrôleurs de suivi de sorties commandées SISO recevant des erreurs de suivi de sorties primaires commandées et fournissant des pseudo-entrées à la section logique de sélection ;

fournir la section logique de sélection (50), la section logique de sélection comparant les pseudo-entrées générées par le contrôleur de découplage de contraintes MIMO (60) et les pseudo-entrées générées par les contrôleurs de suivi de sorties commandées SISO, la section logique de sélection sélectionnant en outre la contrainte la plus limite pour déterminer les pseudo-entrées finales à aller dans le contrôleur de découplage primaire MIMO (40) ; et

fournir un ensemble de contrôleurs de suivi de sorties de contraintes découplées à entrée unique et sortie unique (SISO) (64), les contrôleurs de suivi de sorties de contraintes SISO recevant des erreurs de suivi de sorties de contraintes et fournissant les entrées au contrôleur de découplage de contraintes MIMO.

FIG. 1

EP 2 812 760 B1

FIG. 2

FIG. 3

FIG. 4

FIG. 5

START ~20

$\dot{v}_1^{y_1} \neq \dot{v}_1^{ML}$
&&
$\dot{v}_2^{y_2} \neq \dot{v}_2^{ML}$

22

YES

$\dot{v}_1 = \dot{v}_{1,M}^{ML}$
$\dot{v}_2 = \dot{v}_{2,M}^{ML}$

24

NO

$\dot{v}_1^{y_1} \neq \dot{v}_1^{ML}$
&&
$\dot{v}_2^{y_2} = \dot{v}_2^{ML}$

28

YES

$\dot{v}_1 = \dot{v}_{1,S}^{ML}$
$\dot{v}_2 = \dot{v}_2^{y_2}$

30

NO

$\dot{v}_1^{y_1} = \dot{v}_1^{ML}$
&&
$\dot{v}_2^{y_2} \neq \dot{v}_2^{ML}$

32

YES

$\dot{v}_1 = \dot{v}_1^{y_1}$
$\dot{v}_2 = \dot{v}_{2,S}^{ML}$

34

NO

$\dot{v}_1 = \dot{v}_1^{y_1}$
$\dot{v}_2 = \dot{v}_2^{y_2}$

36

END ~26

FIG. 6

33

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070189462 A1